(19) Europäisches Patentamt
European Patent Office
Office européen des brevets

(11) EP 4 755 954 A1

(12) EUROPEAN PATENT APPLICATION

(43) Date of publication:
**10.06.2026 Bulletin 2026/24**

(21) Application number: **25220383.1**

(22) Date of filing: **03.12.2025**

(51) International Patent Classification (IPC):
***C08J 5/18*** *(2006.01)* ***C08J 3/00*** *(2006.01)*
***B29C 48/00*** *(2019.01)* ***B29C 61/00*** *(2006.01)*
***C08G 63/183*** *(2006.01)* ***C08G 63/46*** *(2006.01)*

(52) Cooperative Patent Classification (CPC):
**C08J 5/18; B29C 48/0018; B29C 61/003; C08G 63/183; C08G 63/46;** C08J 3/005; C08J 2367/02; C08J 2400/30; C08J 2467/02

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **06.12.2024 US 202463729252 P**

(71) Applicant: **Far Eastern New Century Corporation**
**Taipei City 106428 (TW)**

(72) Inventors:
- **LEU, Yow-An**
**330052 Taoyuan City (TW)**
- **CHEN, Yi-Fen**
**330052 Taoyuan City (TW)**
- **CHANG, Li-Ling**
**330052 Taoyuan City (TW)**
- **TSAI, Ching-Chun**
**330052 Taoyuan City (TW)**

(74) Representative: **Marks & Clerk LLP**
**15 Fetter Lane**
**London EC4A 1BW (GB)**

# (54) METHODS FOR PREPARING A POLYESTER FILM AND COMPOSITIONS THEREOF

(57) This disclosure provides methods of preparing heat-shrinkable polyester films, wherein the heat-shrinkable polyester films are made of compositions which include recycled material. Such methods include a method for manufacturing a heat-shrinkable polyester film comprising: (a) heating a mixture comprising terephthalic acid (TPA) or dimethyl terephthalate (DMT), ethylene glycol (EG), a modifier component, and optionally, recycled material to undergo esterification to provide an esterified product; (b) heating the esterified product in the presence of a catalyst, heat stabilizer, and optionally, recycled material to undergo polymerization and to provide a polyester product; (c) granulating the polyester product to provide a polyester resin composition; (d) extruding the polyester resin composition to provide a sheet, wherein the extruding occurs at a temperature of about 180°C to about 280°C; and (e) subjecting the sheet to a film formation process to provide the heat-shrinkable polyester film, wherein the recycled material is added at step (a), step (b), or both steps (a) and (b).

EP 4 755 954 A1

## Description

CROSS REFERENCE TO RELATED APPLICATIONS

This application claims the benefit of priority to U.S. Provisional Patent Application No. 63/729,252 filed December 6, 2024, which is incorporated herein by reference, in its entirety for any and all purposes.

FIELD

This disclosure relates to methods for manufacturing a heat-shrinkable polyester film, wherein the heat-shrinkable polyester film is made of a composition that includes recycled material. This disclosure also relates to heat-shrinkable polyester films made by such methods.

BACKGROUND

Heat-shrinkable polyester films are widely used as disposable secondary packaging but are conventionally made from polyvinyl chloride (PVC) or oriented polystyrene (OPS). To lower the environmental impact of such products, there has been growing interest to prepare these films using recycled materials. Heat-shrinkable polyester films are an attractive option as these films may be prepared from recycled polyethylene terephthalate (PET) materials.

However, using recycled PET materials to prepare heat-shrinkable polyester films introduces impurities that lead to undesirable properties and adversely impact the performance of such films. For instance, recycled PET materials (referred to as PCR or recycled material(s)) include PET bottle fragments and a small amount of unremoved labels, such as polyester label films and PVC label films. Unremoved PVC label films have residual benzene, which thermally decompose polymers during the heat-shrinkable polyester film production process, produce oligomers, and increase the acid value. Benzene and oligomers are both small-molecule impurities that affect the film's crystallinity, which impact the shrinkage and shrink force and therefore the downstream processing quality (e.g., shrinking performance). In addition, when exposed to the high temperature heating intrinsic to the film-making process (e.g. extrusion, preheating, stretching, annealing), the amounts of benzene and oligomers increase, and oligomers and polyesters with high acid values thermally decompose into small molecule impurities-both of which negatively impact the production roller wiping frequency and the quality of the resulting films, such as haze and gloss. Thus, there remains a need to prepare heat-shrinkable polyester films having significantly low amounts of small molecule impurities.

This disclosure provides methods for producing heat-shrinkable polyester films having significantly low amounts of small molecules impurities. Such films have high shrinkage, low haze, high gloss, and high processability.

SUMMARY

Provided in one aspect is a method for manufacturing a heat-shrinkable polyester film comprising:

(a) heating a mixture comprising terephthalic acid (TPA) or dimethyl terephthalate (DMT), ethylene glycol (EG), a modifier component, and optionally, recycled material to undergo esterification to provide an esterified product;
(b) heating the esterified product in the presence of a catalyst, heat stabilizer, and optionally, recycled material to undergo polymerization and to provide a polyester product;
(c) granulating the polyester product to provide a polyester resin composition;
(d) extruding the polyester resin composition to provide a sheet, wherein the extruding occurs at a temperature of from about 180°C to about 280°C; and
(e) subjecting the sheet to a film formation process to provide the heat-shrinkable polyester film,

wherein the recycled material is added at step (a), step (b), or both steps (a) and (b).

In some embodiments, in step d) the extruding occurs at a temperature of about 250°C.

In some embodiments, in step a) the mixture is heated at a temperature of about 175°C to about 275°C. In some embodiments, in step a) the mixture is heated at a temperature of about 250°C. In some embodiments, in step a) the mixture is heated at a temperature of about 225°C to about 275°C. In some embodiments, in step a) the mixture is heated at a temperature of about 200°C. In some embodiments, in step a) the mixture is heated at a temperature of about 250°C.

In some embodiments, in step b) the esterified product is heated at a temperature of about 250°C to about 300°C under vacuum. In some embodiments, in step b) the esterified product is heated at a temperature of about 275°C under vacuum. In some embodiments, in step b) the polyester product reaches an intrinsic viscosity (IV) of about 0.5 dL/g to about 0.7 dL/g.

In some embodiments, the recycled material comprises recycled polyester flakes, recycled polyester resins,

recycled PET (rPET) resins, recycled polyethylene terephthalate (PET) flakes, recycled terephthalic acid (rTPA), recycled ethylene glycol (rEG), recycled neopentyl glycol (rNPG), recycled bis-hydroxyethyl terephthalate (rBHET), and any combination thereof.

In some embodiments, the heat-shrinkable polyester film comprises about 10 wt% to about 90 wt% recycled material, based on a total weight of the heat-shrinkable polyester film. In some embodiments, the heat-shrinkable polyester film comprises about 10 wt% to about 50 wt% recycled material, based on the total weight of the heat-shrinkable polyester film.

In some embodiments, the modifier component comprises one or more of neopentyl glycol, 2-methyl-1,3-propanediol, 1,4-cyclohexanedimethanol, diethylene glycol, and butanediol, optionally one or more of neopentyl glycol and 2-methyl-1,3-propanediol. In some embodiments, the modifier component comprises neopentyl glycol. In some embodiments, the modifier component comprises 2-methyl-1,3-propanediol. In some embodiments, the modifier component comprises neopentyl glycol and 2-methyl-1,3-propanediol.

In some embodiments, the heat-shrinkable polyester film has a neopentyl glycol molar percentage of about 13 mol% to about 35 mol%, based on the total diol molar percentage is about 100 mol%. In some embodiments, the heat-shrinkable polyester film has a neopentyl glycol molar percentage of about 15 mol% to about 35 mol%, based on the total diol molar percentage is about 100 mol%. In some embodiments, the heat-shrinkable polyester film has a neopentyl glycol molar percentage of neopentyl glycol of about 15 mol% to about 25 mol%, based on the total diol molar percentage is about 100 mol%.

In some embodiments, the heat-shrinkable polyester film has a 2-methyl-1,3-propanediol molar percentage of about 13 mol% to about 35 mol%, based on the total diol molar percentage is about 100 mol%. In some embodiments, the heat-shrinkable polyester film has a 2-methyl-1,3-propanediol molar percentage of about 15 mol% to about 35 mol%, based on the total diol molar percentage is about 100 mol%. In some embodiments, the heat-shrinkable polyester film has a 2-methyl-1,3-propanediol molar percentage of neopentyl glycol of about 15 mol% to about 25 mol%, based on the total diol molar percentage is about 100 mol%.

In some embodiments, the heat-shrinkable polyester film has a benzene content of less than about 500 ppb. In some embodiments, the heat-shrinkable polyester film has a benzene content of from about 0 ppb to about 500 ppb. In some embodiments, the heat-shrinkable polyester film has a benzene content of from about 5 ppb to about 500 ppb.

Provided in another aspect is a heat-shrinkable polyester film prepared by any one of the methods described herein.

Provided in another aspect is a heat-shrinkable polyester film comprising a polyester resin composition comprising terephthalic acid or dimethyl terephthalate, ethylene glycol, a modifier component, and recycled material, wherein the heat-shrinkable polyester film has a benzene content of less than about 500 ppb, a C3 oligomer content of less than about 6500 ppm, a C4 oligomer content of less than 1000 ppm, and a C5 oligomer content of less than 700 ppm.

In some embodiments, the heat-shrinkable polyester film has a benzene content of about 0 ppb to about 300 ppb. In some embodiments, the heat-shrinkable polyester film has a benzene content of about 5 ppb to about 100 ppb. In some embodiments, the heat-shrinkable polyester film has a C3 oligomer content of about 100 ppm to about 5500 ppm.

In some embodiments, the heat-shrinkable polyester film has a C4 oligomer content of about 100 ppm to about 950 ppm. In some embodiments, the heat-shrinkable polyester film has a C5 oligomer content of about 100 ppm to about 650 ppm.

In some embodiments, the heat-shrinkable polyester film has an acid value of less than 40 eq/t. In some embodiments, the heat-shrinkable polyester film has an acid value of about 5eq/t to about 35 eq/t. In some embodiments, the heat-shrinkable polyester film has an acid value of about 10 eq/t to about 30 eq/t.

In some embodiments, the heat-shrinkable polyester film has a haze of less than 4%. In some embodiments, the heat-shrinkable polyester film has a haze of about 1% to about 4%.

In some embodiments, the heat-shrinkable polyester film has a gloss of greater than about 140GU. In some embodiments, the heat-shrinkable polyester film has a gloss of about 140GU to about 160GU.

In some embodiments, the heat-shrinkable polyester film has a shrinkage in the transverse direction of greater than about 55% after immersing the heat-shrinkable polyester film at about 95°C for about 10 seconds. In some embodiments, the heat-shrinkable polyester film has a shrinkage in the machine direction of less than about 5% after immersing the heat-shrinkable polyester film at about 95°C for about 10 seconds.

In some embodiments, a value obtained from dividing the shrink force in the transverse direction (TD) by the TD shrinkage after immersing the heat-shrinkable polyester film at about 95°C for about 10 seconds that is less than about or equal to 20 MPa.

In some embodiments, the recycled material comprises recycled polyester flakes, recycled polyester resins, recycled PET (rPET) resins, recycled polyethylene terephthalate (PET) flakes, recycled terephthalic acid (rTPA), recycled ethylene glycol (rEG), recycled neopentyl glycol (rNPG), recycled bis-hydroxyethyl terephthalate (rBHET), and any combination thereof.

In some embodiments, the heat-shrinkable polyester film comprises about 10 wt% to about 90 wt% recycled

material, based on a total weight of the heat-shrinkable polyester film. In some embodiments, the heat-shrinkable polyester film comprises about 10 wt% to about 50 wt% recycled material, based on the total weight of the heat-shrinkable polyester film.

In some embodiments, the heat-shrinkable polyester film has a total weight loss of less than 1% as determined by TGA at 250°C and 10 minutes.

In some embodiments, the modifier component comprises one or more of neopentyl glycol, 2-methyl-1,3-propanediol, 1,4-cyclohexanedimethanol, diethylene glycol, and butanediol. In some embodiments, the modifier component comprises one or more of neopentyl glycol and 2-methyl-1,3-propanediol. In some embodiments, the modifier component comprises neopentyl glycol. In some embodiments, the polyester film has a neopentyl glycol molar percentage of about 13 mol% to about 35 mol%, based on the total diol molar percentage is about 100 mol%. In some embodiments, the polyester film has a neopentyl glycol molar percentage of about 15 mol% to about 35 mol%, based on the total diol molar percentage is about 100 mol%. In some embodiments, the modifier component comprises 2-methyl-1,3-propanediol. In some embodiments, the polyester film has a 2-methyl-1,3-propanediol molar percentage of about 15 mol% to about 35 mol%, based on the total diol molar percentage is about 100 mol%.

## BRIEF DESCRIPTION OF THE DRAWINGS

FIG. 1 illustrates a flowchart of the methods for making polyester heat-shrinkable films as described herein.

## DETAILED DESCRIPTION

This disclosure provides methods for producing heat-shrinkable polyester films containing recycled material having significantly low amounts of small molecules impurities (e.g., residual benzene from the recycled material and oligomers produced from thermal decomposition of the polymers due to the presence of residual benzene). The polyester heat-shrinkable polyester films prepared in accordance with the methods described herein have high shrinkage, low haze, high gloss, and high processability.

FIG. 1 illustrates the methods for making heat-shrinkable polyester films as described herein. In some embodiments, a mixture comprising terephthalic acid (TPA) or dimethyl terephthalate (DMT), ethylene glycol (EG), a modifier component (e.g., neopentyl glycol (NPG)), and optionally, recycled material is prepared. This mixture is then heated to undergo esterification to provide an esterified product. The esterified product is then heated in the presence of a catalyst (e.g., antimony glycol), a heat stabilizer (e.g., trimethyl phosphate), and optionally, recycled material to undergo polymerization to provide a polyester product. As shown in the figure, it is possible to add the recycled material to the mixture and/or to the esterified product at the polymerization step. The polyester product is then processed (e.g., granulation) to provide the polyester resin composition (e.g., in the form of chips), which is then heated and extruded to provide a sheet. The temperature for the extruding is below 300°C, in particular from about 180°C to about 280°C. The sheet is then subjected to a film forming process to provide the heat-shrinkable polyester film.

To minimize the small molecules impurities, the methods described herein utilize the following steps: (i) limiting the feeding of the recycled PET materials to the beginning of the manufacturing process to the mixture (e.g. during the esterification step) and/or during the polymerization step; and (ii) maintaining the temperature at the extruding step at a temperature of about 180°C to about 280°C. Also, for embodiments wherein the mixture comprises neopentyl glycol, the amount of neopentyl glycol is also important, wherein polyester films have a neopentyl glycol molar percentage of about 15 mol% to about 35 mol%, assuming that the total diol molar percentage is about 100 mol%. These features for making the heat-shrinkable polyester films as described herein are illustrated in the Examples. Comparative examples are also provided.

### Methods for Making Heat-Shrinkable Polyester Films

Provided in one aspect is a method for manufacturing a heat-shrinkable polyester film comprising:

(a) heating a mixture comprising a dicarboxylic acid component, a diol component, optionally, a modifier component, and optionally, recycled material to undergo esterification and to provide an esterified product;
(b) heating the esterified product in the presence of a catalyst, heat stabilizer, and optionally, recycled material to undergo polymerization to provide a polyester product;
(c) granulating the polyester product to provide a polyester resin composition;
(d) extruding the polyester resin composition to provide a sheet, wherein the extruding is at temperature of from about 180°C to about 280°C; and
(e) subjecting the sheet to a film formation process to provide the heat-shrinkable polyester film,

wherein the recycled material is added at step (a), step (b), or both steps (a) and (b).

The dicarboxylic acid component may include one or more diacarboxylic acid monomers or derivatives thereof (e.g., diester monomers). Examples of dicarboxylic acid monomers or derivatives thereof include, but are not limited to, terephthalic acid, dimethyl terephthalate (DMT), isophthalic acid (IPA), 1,4-cyclohexanedicarboxylic acid (1,4-CHDA), oxalic acid, succinic acid, adipic acid (AA), sebacic acid, azalaic acid, 1,4-naphthalenedicarboxylic acid, 2,5-furandicarboxylic acid (FDCA), 1,3-cyclohexane dicarboxylic acid, butanedioic acid, hexanedioic acid, decanedioic acid, and combinations thereof. These dicarboxylic acid monomer or derivatives thereof may be used alone or in admixture of two or more. In some embodiments, the dicarboxylic acid component comprises terephthalic acid (TPA). In some embodiments, the dicarboxylic acid component comprises dimethyl terephthalate (DMT).

The diol component may include any one or more diol monomers. Examples of the diol monomers include, but are not limited to, ethylene glycol (EG), neopentyl glycol (NPG), 1,3-propanediol, butanediol, 1,5-pentanediol, 2-methyl-1,3-propanediol (MPDO), 2,2-diethyl-1,3-propanediol, 2-butyl-2-ethyl-1,3-propanediol (BEPD), 1,6-hexanediol, 1,4-cyclohexanedimethanol (CHDM), diethylene glycol (DEG), triethylene glycol (TEG), polyethylene glycol (PEG), polypropylene glycol (PPG), polybutylene glycol, poly(tetramethylene ether) glycol (PTMEG), 1,10-decandiol, 2,3-dimethyl-2,3-butanediol, 2-[2-(2-hydroxyethoxy)ethoxy]ethanol, propylene glycol, 1,2-cyclohexane-dimethanol, 1,3-cyclohexane-dimethanol, tetramethyl cyclobutanediol, isosorbide, and combinations thereof. These diol monomers may be used alone or in admixture of two or more. In some embodiments, the diol component comprises ethylene glycol (EG) and neopentyl glycol (NPG). In some embodiments, the diol component comprises ethylene glycol (EG) and 2-methyl-1,3-propanediol (MPDO). In some embodiments, the diol component comprises ethylene glycol (EG) and 1,4-cyclohexanedimethanol (CHDM). In some embodiments, the diol component comprises ethylene glycol (EG), neopentyl glycol (NPG), and diethylene glycol (DEG). In some embodiments, the diol component comprises ethylene glycol (EG), 1,4-cyclohexanedimethanol (CHDM), and diethylene glycol (DEG). In some embodiments, the diol component comprises ethylene glycol (EG), neopentyl glycol (NPG) and butanediol.

The mixtures described herein may comprise a modifier component. The modifier component may include one or more dicarboxylic acid monomers or derivatives thereof, diol monomers, and polyol monomers (e.g., triol or tetrol monomers and not including diol monomers). Examples of polyols include, but are not limited to, trimethylolmethane, trimethylolethane, trimethylolpropane, pentaerythritol, propane-1,2,3-triol, 1,2,6-hexanetriol, and combinations thereof. These polyols may be used alone or in admixture of two or more.

The mixtures described herein may comprise a dicarboxylic acid component, a diol component, optionally, a modifier component, and optionally, recycled material. In some embodiments, the mixtures comprises a dicarboxylic acid component and a diol component. In some embodiments, the mixtures comprises a dicarboxylic acid component, a diol component, and recycled material. In some embodiments, the mixtures comprises a dicarboxylic acid component, a diol component, and a modifier component. In some embodiments, the mixtures comprises a dicarboxylic acid component, a diol component, a modifier component, and recycled material.

In some embodiments, the mixtures described herein may comprise terephthalic acid (TPA) or dimethyl terephthalate (DMT), ethylene glycol (EG), and a modifier component (e.g., any one of the diol monomers or polyol monomers described herein). The modifier component may comprise one or more of neopentyl glycol, 2-methyl-1,3-propanediol, 1,4-cyclohexanedimethanol, diethylene glycol, and butanediol. In some embodiments, the modifier component comprises one or more of neopentyl glycol and 2-methyl-1,3-propanediol.

In some embodiments, the mixture comprises terephthalic acid (TPA), ethylene glycol (EG), and neopentyl glycol (NPG). In some embodiments, the mixture comprises dimethyl terephthalate (DMT), ethylene glycol (EG), and neopentyl glycol (NPG). In some embodiments, the mixture comprises terephthalic acid (TPA), ethylene glycol (EG), and 2-methyl-1,3-propanediol (MPDO). In some embodiments, the mixture comprises terephthalic acid (TPA), ethylene glycol (EG), and 1,4-cyclohexanedimethanol (CHDM). In some embodiments, the mixture comprises terephthalic acid (TPA), ethylene glycol (EG), neopentyl glycol (NPG), and diethylene glycol (DEG). In some embodiments, the mixture comprises terephthalic acid (TPA), ethylene glycol (EG), 1,4-cyclohexanedimethanol (CHDM), and diethylene glycol (DEG). In some embodiments, the mixture comprises terephthalic acid (TPA), ethylene glycol (EG), neopentyl glycol (NPG), and butanediol.

Provided in one aspect is a method for manufacturing a heat-shrinkable polyester film comprising:

(a) heating a mixture comprising terephthalic acid (TPA) or dimethyl terephthalate (DMT), ethylene glycol (EG), a modifier component, and optionally, recycled material to undergo esterification and to provide an esterified product;
(b) heating the esterified product in the presence of a catalyst, heat stabilizer, and optionally, recycled material to undergo polymerization to provide a polyester product;
(c) granulating the polyester product to provide a polyester resin composition;
(d) extruding the polyester resin composition to provide a sheet, wherein the extruding is at a temperature of from about 180°C to about 280°C; and
(e) subjecting the sheet to a film formation process to provide the heat-shrinkable polyester film,

wherein the recycled material is added at step (a), step (b), or both steps (a) and (b).

Provided in one aspect is a method for manufacturing a heat-shrinkable polyester film comprising:

(a) heating a mixture comprising terephthalic acid, ethylene glycol, neopentyl glycol, and optionally, recycled material to undergo esterification and to provide an esterified product;
(b) heating the esterified product in the presence of a catalyst, heat stabilizer, and optionally, recycled material to undergo polymerization to provide a polyester product;
(c) granulating the polyester product to provide a polyester resin composition;
(d) extruding the polyester resin composition to provide a sheet, wherein the extruding is at a temperature of from about 180°C to about 280°C; and
(e) subjecting the sheet to a film formation process to provide the heat-shrinkable polyester film,

wherein the recycled material is added at step (a), step (b), or both steps (a) and (b).

The methods described herein include embodiments as recited in the preceding paragraph and shown in Option B of FIG.1 (also referred as the "two-stage process"), wherein before extrusion, the polyester products are cooled and granulated to provide the polyester resin compositions (polyester chips). Such processes that utilize step (c) are referred to as a "two-stage process." For such methods, the polyester resin compositions are further remelted during the extrusion process. In some embodiments, the polyester resin composition in step c) is not cooled to a temperature of from about 10°C to about 80°C. In some embodiments, the polyester resin composition in step c) is not cooled to a temperature of from about 15°C to about 60°C, including from about 20°C to about 30°C.

The methods described herein also include embodiments as shown in Option A of FIG.1 (also referred as the "continuous process"), wherein step (c) is not required. That is the polyester product (polyester melt) is not cooled and granulated to provide the polyester resin composition (polyester chips). In such embodiments, the polyester product is subjected to the extruding step to provide the sheet. Such processes wherein step (c) is not required are referred to known as a continuous flow process that allow for a seamless film production. Thus, the polyester products (polyester melts) described herein may be directly extruded to provide the polyester sheet.

In the methods described herein, extruding occurs at a temperature of from about 180°C to about 280°C, including about 180°C, about 185°C, about 190°C, about 195°C, about 200°C, about 205°C, about 210°C, about 215°C, about 220°C, about 225°C, about 230°C, about 235°C, about 240°C, about 245°C, about 250°C, about 255°C, about 260°C, about 265°C, about 270°C, about 275°C, and about 280°C. In some embodiments, in step d) the extruding occurs at a temperature of about 250°C.

In the methods described herein, in step a) the mixture is heated at a temperature of about 175°C to about 275°C, including about 175°C, about 180°C, about 185°C, about 190°C, about 195°C, about 200°C, about 205°C, about 210°C, about 215°C, about 220°C, about 225°C, about 230°C, about 235°C, about 240°C, about 245°C, about 250°C, about 255°C, about 260°C, about 265°C, about 270°C, and about 275°C. In some embodiments, in step a) the mixture is heated at a temperature of from about 175°C to about 275°C. In some embodiments, in step a) the mixture is heated at a temperature of about 200°C. In some embodiments, in step a) the mixture is heated at a temperature of about 250°C.

In the methods described herein, in step b) the esterified product is heated at a temperature of about 250°C to about 300°C under vacuum, including about 250°C, about 255°C, about 260°C, about 265°C, about 270°C, about 275°, about 280°C, about 285°, about 290°C, about 295°, and about 300°C under vacuum. In some embodiments, in step b) the esterified product is heated at a temperature of about 275°C under vacuum.

In the methods described herein, in step b) the polyester product reaches an intrinsic viscosity (IV) of about 0.5 dL/g to about 0.7 dL/g, including about 0.5 dL/g, about 0.55 dL/g, about 0.6 dL/g, about 0.65 dL/g, and about 0.7 dL/g.

In the methods described herein, in step e), the film forming process includes preheating at a suitable temperature, stretching at a suitable stretch ratio at a suitable temperature, and annealing at a suitable temperature. In the methods described herein, in step e) the sheet is preheated at a temperature of about 75°C to about 110°C, stretched at a temperature of about 70°C to about 100°C, and annealed at a temperature of about 60°C to about 100°C. In some embodiments, in step e) the sheet is preheated at a temperature of about 90 to about 105 °C, stretched at a temperature of about 70 to about 95 °C, and annealed at a temperature of about 60 to about 90 °C.

In the methods described herein, in step e), the film forming process includes stretching the film in the machine direction, transverse direction, or both. In some embodiments, the film is stretched in the machine direction. In some embodiments, the film is stretched in the transverse direction. In some embodiments, the film is stretched in the machine direction and then stretched in the transverse direction.

The film may be stretched in the machine direction at a stretch ratio of from about 1 to about 5, including about 1, about1.15, about 1.25, about 1.50, about 2.0, about 3.0, about 4.0, about 4.5, about 5.0 and about 5.5. In some embodiments, the film is stretched in the machine direction at a stretch ratio of from about 1.0 to about 2.0.

The film may be stretched in the transverse direction at a stretch ratio of from about 3.0 to about 7.0, including about 3.0, about 4.0, about 4.5, about 5.0, about 5.5, about 6.0, and about 7.0. In some embodiments, the film is stretched

in the machine direction at a stretch ratio of from about 4.0 to about 6.0.

In the methods described herein, the recycled material comprises a polyester material obtained from a recycling process of a polyester product. Examples of recycled material include, but are not limited to, recycled polyester flakes, recycled polyester resins, recycled PET (rPET) resins, recycled polyethylene terephthalate (PET) flakes, recycled terephthalic acid (rTPA), recycled ethylene glycol (rEG), recycled neopentyl glycol (rNPG), recycled bis-hydroxyethyl terephthalate (rBHET), and any combination thereof. The PET recycled material may also contain other plastic materials, such as PVC, polystyrene (PS), and polyolefins (e.g., propylenepolyethylene). In some embodiments, the recycled material comprises recycled PET (rPET) flakes, recycled PET (rPET) resins, and recycled bis-hydroxyethyl terephthalate (rBHET),

In the methods described herein, the heat-shrinkable polyester film comprises about 10 wt% to about 90 wt% recycled material, based on a total weight of the polyester film, including about 10 wt%, about 15 wt%, about 20 wt%, about 25 wt%, about 30 wt%, about 35 wt%, about 40 wt%, about 45 wt%, about 50 wt%, about 55 wt%, about 60 wt%, about 65 wt%, about 70 wt%, about 75 wt%, about 80 wt%, about 85 wt%, and about 90 wt% recycled material, based on a total weight of the heat-shrinkable polyester film. In some embodiments, the heat-shrinkable polyester film comprises about 10 wt% to about 50 wt% recycled material, based on the total weight of the heat-shrinkable polyester film.

In the methods described herein, when the mixture comprises neopentyl glycol, the polyester film has a neopentyl glycol molar percentage of about 13 mol% to about 35 mol%, based on the total diol molar percentage is about 100 mol%, including about 13 mol%, about 14 mol%, about 15 mol%, about 20 mol%, about 25 mol%, about 30 mol%, about 35 mol%, based on the total diol molar percentage is about 100 mol%. For instance, for a mixture comprising terephthalic acid (TPA) or dimethyl terephthalate (DMT), ethylene glycol (EG), and neopentyl glycol (NPG), the total diol molar percentage is the sum of the neopentyl glycol molar percentage and ethylene glycol molar percentage. For embodiments, wherein the mixture comprises terephthalic acid (TPA) or dimethyl terephthalate (DMT), ethylene glycol (EG), neopentyl glycol (NPG), and diethylene glycol (DEG), the total diol molar percentage is the sum of the ethylene glycol molar percentage, neopentyl glycol molar percentage, and diethylene glycol molar percentage. For embodiments, wherein the mixture comprises terephthalic acid (TPA) or dimethyl terephthalate (DMT), ethylene glycol (EG), neopentyl glycol (NPG), and butanediol, the total diol molar percentage is the sum of the ethylene glycol molar percentage, neopentyl glycol molar percentage, and butanediol molar percentage. In some embodiments, the polyester film has a neopentyl glycol molar percentage of neopentyl glycol of about 13 mol% to about 25 mol%, based on the total diol molar percentage is about 100 mol%. In some embodiments, the polyester film has a neopentyl glycol molar percentage of neopentyl glycol of about 15 mol% to about 25 mol%, based on the total diol molar percentage is about 100 mol%.

In the methods described herein, when the mixture comprises 2-methyl-1,3-propanediol, the polyester film has a 2-methyl-1,3-propanediol molar percentage of about 13 mol% to about 35 mol%, based on the total diol molar percentage is about 100 mol%, including about 13 mol%, about 14 mol%, about 15 mol%, about 20 mol%, about 25 mol%, about 30 mol%, about 35 mol%, based on the total diol molar percentage is about 100 mol%. For instance, for a mixture comprising terephthalic acid (TPA) or dimethyl terephthalate (DMT), ethylene glycol (EG), and 2-methyl-1,3-propanediol (MPDO), the total diol molar percentage is the sum of the 2-methyl-1,3-propanediol molar percentage and ethylene glycol molar percentage. For embodiments, wherein the mixture comprises terephthalic acid (TPA) or dimethyl terephthalate (DMT), ethylene glycol (EG), 2-methyl-1,3-propanediol (MPDO), and diethylene glycol (DEG), the total diol molar percentage is the sum of the ethylene glycol molar percentage, 2-methyl-1,3-propanediol molar percentage, and diethylene glycol molar percentage. For embodiments, wherein the mixture comprises terephthalic acid (TPA) or dimethyl terephthalate (DMT), ethylene glycol (EG), 2-methyl-1,3-propanediol (MPDO), and butanediol, the total diol molar percentage is the sum of the ethylene glycol molar percentage, 2-methyl-1,3-propanediol molar percentage, and butanediol molar percentage. In some embodiments, the heat-shrinkable polyester film has a 2-methyl-1,3-propanediol molar percentage of 2-methyl-1,3-propanediol of about 13 mol% to about 25 mol%, based on the total diol molar percentage is about 100 mol%. In some embodiments, the heat-shrinkable polyester film has a 2-methyl-1,3-propanediol molar percentage of 2-methyl-1,3-propanediol of about 15 mol% to about 25 mol%, based on the total diol molar percentage is about 100 mol%.

In the methods described herein, the heat-shrinkable polyester film has a benzene content of less than about 500 ppb, including less than about 450 ppb, less than about 400 ppb, less than about 350 ppb, less than about 300 ppb, less than about 250 ppb, less than about 200 ppb, less than about 150 ppb, less than about 100 ppb, less than about 50 ppb, less than about 25 ppb, less than about 15 ppb, less than about 10 ppb, or less than about 5 ppb. In some embodiments, the heat-shrinkable polyester film has a benzene content of greater than about 0 ppb and less than about 500 ppb. In some embodiments, the heat-shrinkable polyester film has a benzene content of greater than about 5 ppb and less than about 500 ppb.

In the methods described herein, the heat-shrinkable polyester film has a benzene content of from about 0 ppb to about 500 ppb, including about 0 ppb, about 5 ppb, about 10 ppb, about 15 ppb, about 20 ppb, about 30 ppb, about 40 ppb, about 50 ppb, about 100 ppb, about 150 ppb, about 200 ppb, about 250 ppb, about 300 ppb, about 350 ppb, about 400 ppb, about 450 ppb, and about 500 ppb. In some embodiments, the heat-shrinkable polyester film has a benzene content of about 5 ppb to about 500 ppb. In some embodiments, the heat-shrinkable polyester film has a benzene content of about 5

ppb to about 100 ppb.

**Heat-Shrinkable Polyester Films**

Provided in one aspect is a heat-shrinkable polyester film comprising a polyester resin composition comprising terephthalic acid or dimethyl terephthalate, ethylene glycol, a modifier component, and recycled material,

wherein heat-shrinkable polyester film has a benzene content of less than about 500 ppb, a C3 oligomer content of less than about 6500 ppm, a C4 oligomer content of less than 1000 ppm, and a C5 oligomer content of less than 700 ppm.

The heat-shrinkable polyester films described herein may have neopentyl glycol as the modifier component. For such embodiments, heat-shrinkable polyester film has a neopentyl glycol molar percentage of from about 15 mol% to about 35 mol%, based on the total diol molar percentage is about 100 mol%.

The heat-shrinkable polyester films described herein may have 2-methyl-1,3-propanediol (MPDO) as the modifier component. For such embodiments, heat-shrinkable polyester film has a 2-methyl-1,3-propanediol molar percentage of from about 15 mol% to about 35 mol%, based on the total diol molar percentage is about 100 mol%.

The heat-shrinkable polyester films described herein have a benzene content of about 0 ppb to about 300 ppb, including about 0 ppb, about 5 ppb, about 10 ppb, about 25 ppb, about 50 ppb, about 100 ppb, about 150 ppb, about 200 ppb, about 250 ppb, and about 300 ppb. In some embodiments, the heat-shrinkable polyester films have a benzene content of about 5 ppb to about 300 ppb. In some embodiments, the heat-shrinkable polyester films have a benzene content of about 0 ppb to about 100 ppb. In some embodiments, the heat-shrinkable polyester films have a benzene content of about 5 ppb to about 100 ppb.

The heat-shrinkable polyester films described herein have a C3 oligomer content of about 100 ppm to about 5500 ppm, including about 100 ppm, about 200 ppm, about 300 ppm, about 400 ppm, about 500 ppm, about 600 ppm, about 700 ppm, about 800 ppm, about 900 ppm, about 1000 ppm, about 1100 ppm, about 1200 ppm, about 1300 ppm, about 1400 ppm, about 1500 ppm, about 1600 ppm, about 1700 ppm, about 1800 ppm, about 1900 ppm, about 2000 ppm, about 2100 ppm, about 2200 ppm, about 2300 ppm, about 2400 ppm, about 2500 ppm, about 2600 ppm, about 2700 ppm, about 2800 ppm, about 2900 ppm, about 3000 ppm, about 3100 ppm, about 3200 ppm, about 3300 ppm, about 3400 ppm, about 3500 ppm, about 3600 ppm, about 3700 ppm, about 3800 ppm, about 3900 ppm, about 4000 ppm, about 4100 ppm, about 4200 ppm, about 4300 ppm, about 4400 ppm, about 4500 ppm, about 4600 ppm, about 4700 ppm, about 4800 ppm, about 4900 ppm, about 5000, about 5100 ppm, about 5200 ppm, about 5300 ppm, about 5400 ppm, and about 5500 ppm.

The heat-shrinkable polyester films described herein have a C4 oligomer content of about 100 ppm to about 950 ppm, including about 100 ppm, about 150 ppm, about 200 ppm, about 250 ppm, about 300 ppm, about 350 ppm, about 400 ppm, about 450 ppm, about 500 ppm, about 550 ppm, about 600 ppm, about 650 ppm, about 700 ppm, about 750 ppm, about 800 ppm, about 850 ppm, about 900 ppm, and about 950 ppm.

The heat-shrinkable polyester films described herein have a C5 oligomer content of about 100 ppm to about 650 ppm, including about 100 ppm, about 150 ppm, about 200 ppm, about 250 ppm, about 300 ppm, about 350 ppm, about 400 ppm, about 450 ppm, about 500 ppm, about 550 ppm, about 600 ppm, and about 650 ppm.

The heat-shrinkable polyester films described herein have an acid value of less than about 40 equivalent/ton (eq/t), including less than about 35 eq/t, less than about 30 eq/t, less than about 25 eq/t, less than about 20 eq/t, and less than about 15 eq/t.

The heat-shrinkable polyester films described herein have an acid value of about 5 eq/t to about 35 eq/t, including about 5 eq/t, about 10 eq/t, about 15 eq/t, about 20 eq/t, about 25 eq/t, about 30 eq/t, and about 35 eq/t. In some embodiments, heat-shrinkable polyester films described have an acid value of about 10 eq/t to about 30 eq/t.

In some embodiments, the heat-shrinkable polyester films may further include other additives based on practical requirements. Examples of the additives may include, but are not limited to, catalysts, heat-stabilizers, stabilizers, antioxidants, antistatic agents, antifoam agents, dyeing assistants, dyes, colorants, delusterants, fluorescent brighteners, reaction promoters, and other additives. Examples of the catalysts may include, but are not limited to, antimony trioxide, antimony glycolate, titanium-containing catalysts, germanium-containing catalysts, tin-containing catalysts, gallium-containing catalysts, aluminum-containing catalysts, and combinations thereof. Examples of the heat stabilizers may include, but are not limited to, phosphoric acid, trimethyl phosphate, triethyl phosphate, and tripropyl phosphate (TPP).

The heat-shrinkable polyester films described herein have a haze of less than about 4%, including less than about 3.5%, less than about 3%, less than about 2.5%, less than about 2%, less than about 1.5%, less than about 1%, and less than about 0.5%.

The heat-shrinkable polyester films described herein have a haze of about 1% to about 4%, including about 1%, about 1.5%, about 2%, about 2.5%, about 3%, about 3.5% and about 4%.

The heat-shrinkable polyester films described herein have a gloss of greater than about 140GU, including greater than about 145GU, greater than about 150GU, greater than about 155GU, and greater than about 160GU.

The heat-shrinkable polyester films described herein have a gloss of about 140GU to about 160GU, including about 140GU, about 145GU, about 150GU, about 155GU, and about 160GU.

The heat-shrinkable polyester films described herein have a glass transition temperature that is from about 60°C to about 90°C, including about 60°C, about 65°C, about 70°C, about 75°C, about 80°C, about 85°C, and about 90°C.

The heat-shrinkable polyester films described herein have a crystallization temperature that is from about 100°C to about 140°C, including about 100°C, about 105°C, about 110°C, about 115°C, about 120°C, about 125°C, about 130°C, about 135°C, and about 140°C.

The heat-shrinkable polyester films described herein have a melting point temperature that is from about 210°C to about 250°C, including about 210°C, about 215°C, about 220°C, about 225°C, about 230°C, about 235°C, about 240°C, about 245°C, and about 250°C.

The heat-shrinkable polyester films described herein have a melting point temperature this is equal or greater than the crystallization temperature by about 0°C to about 110°C, including about 0°C, about 10°C, about 20°C, about 30°C, about 40°C, about 50°C, about 60°C, about 70°C, about 80°C, about 90°C, about 100°C, and about 110°C.

The heat-shrinkable polyester films described herein have a crystallization temperature this is greater than the glass transition temperature by about 30°C to about 70°C, including about 30°C, about 35°C, about 40°C, about 45°C, about 50°C, about 55°C, about 60°C, about 65°C, and about 70°C.

The heat-shrinkable polyester films described herein have a heat shrinkage in the transverse direction of greater than about 55% after immersing the heat-shrinkable polyester film at about 95°C for about 10 seconds. In some embodiments, the heat-shrinkable polyester films described herein have a heat shrinkage in the transverse direction of about 50% to about 80% after immersing the heat-shrinkable polyester film at about 95°C for about 10 seconds.

The heat-shrinkable polyester films described herein have a heat shrinkage in the machine direction of less than about 5% after immersing the heat-shrinkable polyester film at about 95°C for about 10 seconds. The heat-shrinkable polyester films described herein have a heat shrinkage in the machine direction of about -5% to about 5% after immersing the heat-shrinkable polyester film at about 95°C for about 10 seconds.

The heat-shrinkable polyester films described herein have a transverse direction shrink force of less than about 20 MPa after immersing the heat-shrinkable polyester film at about 95°C for about 10 seconds. In some embodiments, the heat-shrinkable polyester films have a transverse direction shrink force of about 10 MPa to about 20 MPa after immersing the heat-shrinkable polyester film at about 95°C for about 10 seconds.

The heat-shrinkable polyester films described herein have a value obtained from dividing the shrink force in TD by the TD shrinkage after immersing the heat-shrinkable polyester film at about 95°C for about 10 seconds that is less than about or equal to 20 MPa. In some embodiments, the heat-shrinkable films described herein have a value obtained from dividing the shrink force in TD by the TD shrinkage immersing the heat-shrinkable polyester film at about 95°C for about 10 seconds, which is from about 10 MPa to about 20MPa, including from about 10 MPa, about 11 MPa, about 12 MPa, about 13 MPa, about 14 MPa, about 15 MPa, about 16 MPa, about 17 MPa, about 18 MPa, about 19 MPa, and about 20 MPa.

The heat-shrinkable polyester films described herein have a total weight loss of less than about 1% as determined by thermogravimetric analysis (TGA) at 250°C and 10 minutes. In some embodiments, the heat-shrinkable polyester films described herein have a total weight loss of from about 0.01% to about 1% as determined by TGA at 250°C and 10 minutes, including about 0.01%, about 0.05%, about 0.1%, about 0.2%, about 0.3%, about 0.4%, about 0.5%, about 0.6%, about 0.7%, about 0.8%, about 0.9%, and about 1% as determined by TGA at 250°C and 10 minutes.

When prepared in accordance with the methods described herein, the heat-shrinkable films may have one or more of the following:

(a) for embodiments, where the mixture comprises NPG, a NPG content of from about 13 to 35 mol%;

(b) a benzene content of less than about 500 ppb;

(c) a C3 oligomer content of less than about 6500 ppm;

(d) a C4 oligomer content of less than about 1000 ppm;

(e) a C5 oligomer content of less than about 700 ppm;

(f) a total oligomer content of less than about 8000 ppm;

(g) an acid value of less than 40 eq/t;

(h) a total weight loss of less than 1% as determined by TGA at 250°C and 10 minutes;

(i) a difference between the melting temperature ($T_m$) and the crystallization temperature ($T_{ch}$) of from about 0°C to about 110°C;

(j) a difference between the crystallization temperature (Tch) and the glass transition temperature ($T_g$) of from about 30°C to about 70°C;

(k) a TD shrinkage rate of greater than about 55% after immersing the heat-shrinkable polyester film at about 95°C for about 10 seconds;

(l) a MD shrinkage rate of less than about 5% after immersing the heat-shrinkable polyester film at about 95°C for about 10 seconds;

(m) a TD shrink force of less than about 20MPa;

(n) a value obtained from dividing the shrink force in TD by the TD shrinkage after immersing the heat-shrinkable polyester film at about 95°C for about 10 seconds that is less than about or equal to 20 MPa;

(o) a gloss of greater than about 140 GU;

(p) a haze of less than about 4%;

(q) a production roller wiping frequency of at least "O"; and

(r) a downstream processability ( shrinking performance) of at least "O".

**Polyester Resin Composition**

Provided in another aspect is a polyester resin composition terephthalic acid or dimethyl terephthalate, ethylene glycol, a modifier component, and recycled material,
wherein polyester resin composition has a benzene content of less than about 500 ppb, a C3 oligomer content of less than about 6500 ppm, a C4 oligomer content of less than 1000 ppm, and a C5 oligomer content of less than 700 ppm.

The polyester resin composition described herein comprise about 10 wt% to about 90 wt% recycled material, based on a total weight of the polyester resin composition, including about 10 wt%, about 15 wt%, about 20 wt%, about 25 wt%, about 30 wt%, about 35 wt%, about 40 wt%, about 45 wt%, about 50 wt%, about 55 wt%, about 60 wt%, about 65 wt%, about 70 wt%, about 75 wt%, about 80 wt%, about 85 wt%, and about 90 wt% recycled material, based on a total weight of the polyester resin compositions. In some embodiments, the polyester film comprises about 10 wt% to about 50 wt% recycled material, based on the total weight of the polyester resin composition.

The polyester resin compositions described herein may have neopentyl glycol as the modifier component. For such embodiments, the polyester resin composition has a neopentyl glycol molar percentage of about 13 mol% to about 35 mol%, based on the total diol molar percentage is about 100 mol% (e.g., the neopentyl glycol molar percentage and ethylene glycol molar percentage), including about 13 mol%, about 14 mol%, about 15 mol%, about 20 mol%, about 25 mol%, about 30 mol%, and about 35 mol%, based on the total diol molar percentage is about 100 mol%. In some embodiments, the polyester resin composition has a neopentyl glycol molar percentage of neopentyl glycol of about 13 mol% to about 25 mol%, based on the total diol molar percentage is about 100 mol%. In some embodiments, the polyester resin composition has a neopentyl glycol molar percentage of neopentyl glycol of about 15 mol% to about 25 mol%, based on the total diol molar percentage is about 100 mol%.

The polyester resin compositions described herein have a benzene content of about 0 ppb to about 300 ppb, including about 0 ppb, about 5 ppb, about 10 ppb, about 25 ppb, about 50 ppb, about 100 ppb, about 150 ppb, about 200 ppb, about 250 ppb, and about 300 ppb. In some embodiments, the polyester resin compositions have a benzene content of about 5 ppb to about 300 ppb. In some embodiments, the polyester resin compositions have a benzene content of about 0 ppb to about 100 ppb. In some embodiments, the polyester resin compositions have a benzene content of about 5 ppb to about 100 ppb.

The polyester resin compositions described herein have a C3 oligomer content of about 100 ppm to about 5500 ppm, including about 100 ppm, about 200 ppm, about 300 ppm, about 400 ppm, about 500 ppm, about 600 ppm, about 700 ppm, about 800 ppm, about 900 ppm, about 1000 ppm, about 1100 ppm, about 1200 ppm, about 1300 ppm, about 1400 ppm, about 1500 ppm, about 1600 ppm, about 1700 ppm, about 1800 ppm, about 1900 ppm, about 2000 ppm, about 2100 ppm, about 2200 ppm, about 2300 ppm, about 2400 ppm, about 2500 ppm, about 2600 ppm, about 2700 ppm, about 2800 ppm, about 2900 ppm, about 3000 ppm, about 3100 ppm, about 3200 ppm, about 3300 ppm, about 3400 ppm, about 3500 ppm, about 3600 ppm, about 3700 ppm, about 3800 ppm, about 3900 ppm, about 4000 ppm, about 4100 ppm, about 4200 ppm, about 4300 ppm, about 4400 ppm, about 4500 ppm, about 4600 ppm, about 4700 ppm, about 4800 ppm, about 4900 ppm, about 5000, about 5100 ppm, about 5200 ppm, about 5300 ppm, about 5400 ppm, and about 5500 ppm.

The polyester resin compositions described herein have a C4 oligomer content of about 100 ppm to about 950 ppm, including about 100 ppm, about 150 ppm, about 200 ppm, about 250 ppm, about 300 ppm, about 350 ppm, about 400 ppm, about 450 ppm, about 500 ppm, about 550 ppm, about 600 ppm, about 650 ppm, about 700 ppm, about 750 ppm, about 800 ppm, about 850 ppm, about 900 ppm, and about 950 ppm.

The polyester resin compositions described herein have a C5 oligomer content of about 100 ppm to about 650 ppm, including about 100 ppm, about 150 ppm, about 200 ppm, about 250 ppm, about 300 ppm, about 350 ppm, about 400 ppm, about 450 ppm, about 500 ppm, about 550 ppm, about 600 ppm, and about 650 ppm.

The polyester resin compositions described herein have an acid value of less than about 40 equivalent/ton (eq/t), including less than about 35 eq/t, less than about 30 eq/t, less than about 25 eq/t, less than about 20 eq/t, and less than about 15 eq/t.

The polyester resin compositions described herein have an acid value of about 5 eq/t to about 35 eq/t, including about 5 eq/t, about 10 eq/t, about 15 eq/t, about 20 eq/t, about 25 eq/t, about 30 eq/t, and about 35 eq/t. In some embodiments, polyester resin compositions described have an acid value of about 10 eq/t to about 30 eq/t.

## Definitions

Various embodiments are described hereinafter. It should be noted that the specific embodiments are not intended as an exhaustive description or as a limitation to the broader aspects discussed herein. One aspect described in conjunction with a particular embodiment is not necessarily limited to that embodiment and can be practiced with any other embodiment(s).

As used herein, "about" will be understood by persons of ordinary skill in the art and will vary to some extent depending upon the context in which it is used. If there are uses of the term which are not clear to persons of ordinary skill in the art, given the context in which it is used, "about" will mean up to plus or minus 10% of the particular term.

The use of the terms "a" and "an" and "the" and similar referents in the context of describing the elements (especially in the context of the following claims) are to be construed to cover both the singular and the plural, unless otherwise indicated herein or clearly contradicted by context. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the embodiments and does not pose a limitation on the scope of the claims unless otherwise stated. No language in the specification should be construed as indicating any non-claimed element as essential.

## Test Procedures

*Intrinsic viscosity (unit: dL/g):* The intrinsic viscosity is determined in accordance with ASTM D4603 (2003 edition) standard test method for determining the intrinsic viscosity of polyethylene terephthalate using a glass capillary viscometer. 0.25 $\pm$ 0.0025 grams of the sample is measured into 25 mL of solvent (containing 60 wt% phenol and 40 wt% 1,1,2,2-tetrachloroethane) to form a mixed solution. Next, the mixed solution is heated at 110 $\pm$ 10°C for about 1 hour and then cooled to form a sample to be tested. The sample to be tested is measured using an Ostwald viscometer at 25°C, and the intrinsic viscosity is calculated using the Huggins equation.

*Glass transition temperature, $T_g$ (unit:* °C): The glass transition temperature is determined by using a thermal differential scanning analyzer (Brand: TA Instruments; Model: 2910Modulated DSC). The thermal difference scanning curve is obtained by heating the sample from -50°C to 300°C with heating rate of 10°C/min. The glass transition temperature is obtained from the thermal difference scanning curve.

*Neopentyl glycol in total glycol molar percentage (unit: mol%):* The neopentyl glycol molar percentage is determined by $^1$H NMR. For example, 15 mg of the sample is added to a bottle followed by 0.4 mL of a solvent (volume ratio of $CDCl_3$:CF3COOD is 3:1) to dissolve the sample to provide a solution. The solution is then transferred to a nuclear magnetic resonance tube for testing.

*Benzene content (unit: ppb):* The benzene content is determined by using headspace gas chromatography with flame ionization detection (HS-GC-FID). 10 grams of the test sample is allowed to equilibrate in liquid nitrogen for 10 minutes and following by grinding into a powder with a 20-mesh grinder (manufacturer: Wiley Mill). 0.1 mg of the ground sample is weighed into a 20 ml headspace vial and sealed. The sample is analyzed using a headspace auto sampler (Agilent Headspace Auto Sampler 7697A or equivalent) coupled with an Agilent 7890 or equivalent gas chromatogram (GC) equipped with a 30m length x 0.53mm inner diameter and 1$\mu$m film thickness GS-Gas column (Restek RTX-1) with FID. The headspace heating zone is maintained at 200°C, with a headspace loop and transfer line at 210°C and 210°C, respectively. The carrier gas is hydrogen with a flow rate of 21.6 mL/min. The oven is programmed with an initial

temperature of 40°C for 2 min followed with an increase of 50°C/min to 95°C, an increase at 1°C/min to 100°C, and finally an increase at 100°C/min to 290°C. The injector is set at 250°C. The FID detector is set at 325°C. The FID hydrogen flow rate is 30 mL/min, the air flow rate is 280 mL/min, and nitrogen makeup gas flow rate is 25 mL/min. GC ChemStation (Agilent Technologies, Rev A.10.02) is used for signal acquisition and peak integration.

*Oligomer content (unit: ppm):* The oligomer content is determined by placing about 0.05 g of the sample into a sample vial. 1.5 mL of an appropriate solvent (e.g., hexafluoroisopropanol/chloroform in a volume ratio of 2:3) is added, and the sample vial is allowed to sit for 24 hours in order to ensure complete dissolution of the sample. 10 mL of chloroform and 5 mL of methanol are then added following by shaking the vial. The sample solution is then transferred into centrifuge tube and centrifuged for 10 minutes. The clear supernatant is then filtered through a syringe with a 0.45 μm filter and the filtered solution is transferred into a HPLC sample vial.

*Oligomer analysis:* The oligomer analysis is conducted on samples using a High-Performance Liquid Chromatography (HPLC) system (Hitachi Chromaster 5410 UV Detector, Hitachi). The separation is performed using a C18 reversed-phase column (Shim-pack CLC-ODS, 5 μm, 6.0 x 150 mm, Shimadzu). The mobile phase is water and acetonitrile (9:1 ratio) with a flow rate of 1.0 mL/min. The injection volume of the samples are 15 μL.

According to the above method, the C3, C4, and C5 oligomer content is determined, wherein the C3, C4, and C5 oligomers are defined by the following structure:

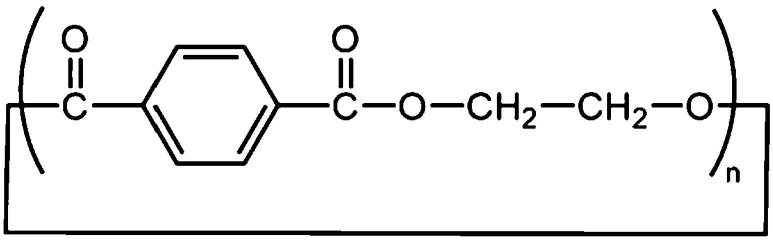

,

n= 3: C3 oligomer;

n =4: C4 oligomer; and

n= 5: C5 oligomer.

As used herein, the total oligomer content refers to the sum of the C3 oligomer content, C4 oligomer content, and C5 oligomer content.

*Acid value (unit: eq/t):* The acid value is determined by first accurately weighing 2-4 grams of the sample and recording the sample weight as W (g). The sample and 25 mL of a mixed solution (phenol in a weight ratio of 3:2) are added to a 100 mL glass sample bottle. The bottle is sealed and heated at 150°C for 20 minutes to ensure complete dissolution of the sample. The solution is then allowed to cool to room temperature. 3-5 drops of bromophenol blue indicator is added to the cooled solution followed by stirring. The solution is titrated with 0.1N KOH-benzyl alcohol standard solution until the color changes from yellow to blue, indicating the titration endpoint. The volume of the standard titrant used is recorded as V (mL). A blank test is performed using the same procedure (without the sample, using only 25 mL of the mixed solution), and the volume of the standard titrant used is recorded as V0 (mL).

The acid value (eq/t) is calculated using the following formula:

$$\frac{(V-V0)\text{x } 0.1 \text{ x } 1000}{W}.$$

*Total weight loss (unit: wt%):* Thermogravimetric analysis is performed using a Thermogravimetric Analyzer (TGA, Perkin Elmer, Pyris 1 TGA) under nitrogen atmosphere. The test conditions are as follows: a) heating from 30°C to 105°C at a rate of 150°C/min; b) holding the temperature at 105°C for 3 minutes to remove water; c) heating from 105°C to 250°C at a rate of 150°C/min; and d) maintaining the temperature at 250°C for 60 minutes.

For the analysis, a sample of 10-15 mg is used for the analysis. The sample weight at 0 minutes during step d (W0) and at 10 minutes (W10) are recorded, and the total weight loss is calculated using the following formula:

$$\text{Total weight loss} = (W_{10}-W_0) / W_0 \text{ x } 100\%.$$

*Crystallization temperature ($T_{ch}$) and melting temperature ($T_m$) (units: °C):* Crystallization temperature and the melting temperature of the heat-shrinkable films described herein are determined using a differential scanning calorimeter (DSC) (Manufacturer: TA Instruments, Inc.; Model: 2910 Modulated DSC™). A test temperature is raised from -50°C to 300°C at a heating rate of 10°C/min.

*TD and MD shrinkage (unit:* %): The TD and MD shrinkage are determined according to the JIS Z1709 standard method. For example, the shrink film are cut into a size of 10 cm × 10 cm, placed in 95°C hot water for 10 seconds. The length of TD (perpendicular to the machine direction) and the length of MD (machine direction) are recorded. The shrinkage is calculated with the following formula, where L0 is the original length of the shrink film (which is 10 cm), and L is the length after being placed in 95°C hot water for 10 seconds.

$$\text{Shrinkage (\%)} = [(L0-L)/L0] \times 100\%$$

*TD shrink force (unit: MPa):* The TD shrink force is determined using a Labthink C631H Thermal Shrinkage Tester (according to ISO 14616-1997). The heat-shrinkable film is cut into a strip shape having a size of 110 mm (TD) x 15mm (MD). The shrink force measurements are conducted at 170°C and held in the heating chamber for 90 seconds. The maximum shrink force value of each film is measured as "TD shrink force".

*Gloss (unit: GU):* The heat shrink film is cut into a size of 10 cm (MD) x 10 cm (TD). The 60° gloss is measured using a gloss meter (Japan Nippon Denshoku, model: VG-2000) according to ASTM D523 (2018 edition). Measurements are taken five times, and the average value is calculated.

*Haze (unit:* %): The heat shrink film is cut into a size of 10 cm (MD) x 10 cm (TD). Haze is measured using a haze meter (Japan Nippon Denshoku, model: NDH-2000) according to ASTM D1003 (2021 edition). Measurements are taken five times, and the average value is calculated.

*Production roller wiping frequency:* During the film production process (sheet width: 1 meter, thickness: 192 μm, line speed: 70 M/min), the frequency of required wiping due to misting on the cooling roll is observed with the naked eye. The observations are classified as follows:

- **O**: No misting observed and no need to wipe for over 168 hours.
- **X**: Misting observed and needed wiping between 24 to 168 hours.
- XX: Misting observed and needed wiping within 24 hours.

*Downstream processability (shrinking performance):* The heat shrink polyester film are cut into a label size of 170 mm (MD) x 220 mm (TD). Using 1,3-dioxolane as a solvent, the two opposite ends of the film in the MD direction are slightly dissolved to create adhesive properties. These ends are then overlapped by 5 mm and connected to form a cylindrical label. The cylindrical label are placed over a 600 mL PET cylindrical container with a diameter of 66 mm, forming the test sample. The test sample is passed through a hot air oven at a speed of 4 M/min and a temperature of 170°C, with a total oven length of 2 meters, to shrink the label onto the bottle.

The appearance of the bottle is then evaluated:

- **O:** Indicates label has no wrinkles or whitening defects.
- **X:** Indicates label has more than one wrinkle and/or whitening defect.

The present invention, thus generally described, will be understood more readily by reference to the following examples, which are provided by way of illustration and are not intended to be limiting of the present invention.

## EXAMPLES

### Preparation Examples

*Preparation Example 1 (with rBHET monomer) - M1:* prepared from Oriental Green Materials Ltd. PET bottles.

*Preparation Example 2 (with rPET resin) - P1:* The recycled bottle (flakes) were melted and extruded and then granulated. The intrinsic viscosity was 0.60 dL/g and contained a benzene concentration of 549 ppb.

*Preparation Example 3 (with rPET resin) - P2:* The recycled bottle (flakes) were melted and extruded and then granulated. The intrinsic viscosity was 0.64 dL/g and contained a benzene concentration of 1589 ppb.

*Preparation Example 4 (22 mol% NPG modified PET resin that contained 10 wt% P1) - P3:* 29539 grams (177.8

mol) of terephthalic acid, 9166 grams (147.7 mol) of ethylene glycol, and 4991 grams (47.9 mol) of neopentyl glycol (NPG) were added to the reactor to form a mixture. Assuming that in the mixture, the total mol of ethylene glycol and neopentyl glycol was 100 mol%, the amount of ethylene glycol was 75.5 mol% and the amount of neopentyl glycol was 24.5 mol%. After the mixture in the reactor was heated to 250°C and evenly mixed, an esterification reaction was performed under a nitrogen environment while the generated water steam was distilled off. When the amount of water distilled reached the theoretical value of complete esterification, 4000 grams of P1, 340 ppm of antimony ethylene glycol and 100 ppm of trimethyl phosphate was added to the reactor to obtain a reactant. With the reactant, the polymerization was performed under vacuum at 275°C. After the intrinsic viscosity (IV) of the reactant reached 0.5~0.7 dL/g, the reactant was granulated through a granulator to obtain NPG-modified PET resin, with a batch size of 40,000 grams. The glass transition temperature of NPG-modified PET resin was 76°C. According to NMR analysis, the actual molar percentage of neopentyl glycol in the total glycol-modified mass was 22 mol%, and the intrinsic viscosity was 0.68 dL/g. The amount of recycled content in the modified PET resin is calculated by the following: 4000 grams of P1 in 40,000 grams of the NPG-modified PET resin, which is 10%.

*Preparation Example 5 (22 mol% NPG modified PET resin that contained 30wt% P1)* - P4: 22622 grams (136.2 mol) of terephthalic acid, 6322 grams (101.9 mol) of ethylene glycol and 4992 grams (47.9 mol) of neopentyl glycol (NPG) were added to the reactor to form a mixture. In the mixture, assuming that the total amount of ethylene glycol and neopentyl glycol was 100 mol%, the amount of ethylene glycol was 68 mol%, and the amount of neopentyl glycol was 32 mol%. After heating the mixture in the reactor to 250 °C and even mixing, the esterification reaction was performed under a nitrogen atmosphere while the generated water was distilled off. When the amount of water distilled reached the theoretical value indicating complete esterification, 12,000 grams of P1 resin, 340 ppm of antimony glycol and 100 ppm of trimethyl phosphate were added to the reactor to obtain a reactant. With the reactant, the polymerization was performed under vacuum at 275°C. After the intrinsic viscosity (IV) of the reactant reached 0.5~0.7 dL/g, the reactant was granulated through a granulator to obtain NPG-modified PET resin, with a batch size of 40,000 grams. The glass transition temperature of NPG-modified PET resin was 76°C. According to NMR analysis, the actual molar percentage of neopentyl glycol in the total glycol-modified mass was 22 mol%, and the intrinsic viscosity was 0.68 dL/g. The amount of recycled content in the modified PET resin is calculated by the following: 12,000 grams of P1 in 40,000 grams of the NPG-modified PET resin, which is 30 wt%.

*Preparation Example 6 (22 mol% NPG modified PET resin that contained 50 wt% P1) - P5:* 15708 grams (94.6 mol) of terephthalic acid, 3486.2 grams (56.2 mol) of ethylene glycol and 4983 grams (47.8 mol) of neopentyl glycol (NPG) were added into the reactor to form a mixture. In the mixture, assuming that the total amount of ethylene glycol and neopentyl glycol was 100 mol%, the amount of ethylene glycol was 54 mol%, and the amount of neopentyl glycol was 46 mol%. After heating the mixture in the reactor to 250 °C and evenly mixing, the esterification reaction was performed under a nitrogen atmosphere while the generated water was distilled off. When the amount of water distilled reached the theoretical value of complete esterification, 20,000 grams of P1 resin, 340 ppm of antimony glycol and 100 ppm of trimethyl phosphate was added to the reactor to obtain a reactant. With the reactant, the polymerization was performed under vacuum at 275°C. After the intrinsic viscosity (IV) of the reactant reached 0.5~0.7 dL/g, the reactant was granulated through a granulator to obtain NPG-modified PET resin, with a batch size of 40,000 grams. The glass transition temperature of NPG-modified PET resin was 76°C. According to NMR analysis, the actual molar percentage of neopentyl glycol in the total glycol-modified mass was 22 mol%, and the intrinsic viscosity was 0.68 dL/g. The amount of recycled content in the modified PET resin is calculated by the following: 20,000 grams of P1 in 40,000 grams of the NPG-modified PET resin, which is 50 wt%.

*Preparation Example 7 (16 mol% NPG modified PET resin that contained 50 wt% P1) - P6:* 16125 grams (97.1 mol) of terephthalic acid, 4440 grams (71.5 mol) of ethylene glycol and 3670 grams (35.2 mol) of neopentyl glycol (NPG) were added into the reactor to form a mixture. In the mixture, assuming that the total amount of ethylene glycol and neopentyl glycol was 100 mol%, the amount of ethylene glycol was 67 mol%, and the amount of neopentyl glycol was 33 mol%. After the heating the mixture in the reactor to 250°C and even mixing, the esterification reaction was performed under a nitrogen atmosphere while the generated water was distilled off. When the amount of water distilled reached the theoretical value of complete esterification, 20,000 grams of P1 resin, 340 ppm of antimony glycol and 100 ppm of trimethyl phosphate was added to the reactor to obtain a reactant. With the reactant, polymerization was performed under vacuum at 275°C. After the intrinsic viscosity (IV) of the reactant reached 0.5~0.7 dL/g, the reactant was granulated through a granulator to obtain NPG-modified PET resin, with a batch size of 40,000 grams. The glass transition temperature of NPG-modified PET resin was 77°C. According to NMR analysis, the actual molar percentage of neopentyl glycol in the total glycol-modified mass was 16 mol%, and the intrinsic viscosity was 0.68 dL/g. The amount of recycled content in the modified PET resin is calculated by the following: 20,000 grams of P1 in 40,000 grams of the NPG-modified PET resin, which is 50 wt%.

*Preparation Example 8 (22 mol% NPG modified PET resin that contained 50 wt% P2) - P7:* 15708 grams (94.6 mol) of terephthalic acid, 3486.2 grams (56.2 mol) of ethylene glycol and 4983 grams (47.8 mol) of neopentyl glycol (NPG) was added into the reactor to form a mixture. In the mixture, assuming that the total amount of ethylene glycol and

neopentyl glycol was 100 mol%, the amount of ethylene glycol was 54 mol%, and the amount of neopentyl glycol is 46 mol%. After the mixture heating the reactor to 250°C and even mixing, the esterification reaction was performed under a nitrogen atmosphere while the generated water was distilled off. When the amount of water distilled reached the theoretical value of complete esterification, 20,000 grams of P2 resin, 340 ppm of antimony glycol and 100 ppm of trimethyl phosphate was added to the reactor to obtain a reactant. With the reactant, the polymerization was performed under vacuum at 275°C. After the intrinsic viscosity (IV) of the reactant reached 0.5~0.7 dL/g, the reactant was granulated through a granulator to obtain NPG-modified PET resin, with a batch size of 40,000 grams. The glass transition temperature of NPG-modified PET resin was 76°C. According to NMR analysis, the actual molar percentage of neopentyl glycol in the total glycol-modified mass was 22 mol%, and the intrinsic viscosity was 0.68 dL/g. The amount of recycled content in the modified PET resin is calculated by the following: 20,000 grams of P2 in 40,000 grams of the NPG-modified PET resin, which is 50 wt%.

*Preparation Example 9 (22 mol% NPG modified PET resin that contained 50 wt% M1) - P8:* 15708 grams (94.6 mol) of terephthalic acid, 3486.2 grams (56.2 mol) of ethylene glycol and 4983 grams (47.8 mol) of neopentyl glycol (NPG) was added into the reactor to form a mixture. In the mixture, assuming that the total amount of ethylene glycol and neopentyl glycol was 100 mol%, the amount of ethylene glycol was 54 mol%, and the amount of neopentyl glycol was 46 mol%. After heating the mixture in the reactor to 250°C and even mixing, the esterification reaction was performed under a nitrogen atmosphere while the generated water was distilled off. When the amount of water distilled reached the theoretical value of complete esterification, 20,000 grams of M1 monomer, 340 ppm of antimony glycol and 100 ppm of trimethyl phosphate was added to the reactor to obtain a reactant. With the reactant, the polymerization was performed under vacuum at 275°C. After the intrinsic viscosity (IV) of the reactant reached 0.5~0.7 dL/g, the reactant was granulated through a granulator to obtain NPG-modified PET resin, with a batch size of 40,000 grams. The glass transition temperature of NPG-modified PET resin was 76°C. According to NMR analysis, the actual molar percentage of neopentyl glycol in the total glycol-modified mass was 22 mol%, and the intrinsic viscosity was 0.68 dL/g. The amount of recycled content in the modified PET resin is calculated by the following: 20,000 grams of M1 in 40,000 grams of the NPG-modified PET resin, which is 50 wt%.

*Preparation Example 10 (11 mol% NPG modified PET resin that contained 50 wt% P1) - P9:* 16479 grams (99.2 mol) of terephthalic acid, 5249 grams (84.6 mol) of ethylene glycol and 2557 grams (24.6 mol) of neopentyl glycol (NPG) was added into the reactor to form a mixture. In the mixture, assuming that the total amount of ethylene glycol and neopentyl glycol was 100 mol%, the amount of ethylene glycol was 77.5 mol%, and the amount of neopentyl glycol was 22.5 mol%. After heating the mixture in the reactor to 250°C and even mixing, the esterification reaction was performed under a nitrogen atmosphere while the generated water was distilled off. When the amount of water distilled reached the theoretical value of complete esterification, 20,000 grams of P1 resin, 340 ppm of antimony glycol and 100 ppm of trimethyl phosphate was added to the reactor to obtain a reactant. With the reactant, the polymerization was performed under vacuum at 275°C. After the intrinsic viscosity (IV) of the reactant reached 0.5~0.7 dL/g, the reactant was granulated through a granulator to obtain NPG-modified PET resin, with a batch size of 40,000 grams. The glass transition temperature of NPG-modified PET resin was 76°C. According to NMR analysis, the actual molar percentage of neopentyl glycol in the total glycol-modified mass was 11 mol%, and the intrinsic viscosity was 0.68 dL/g. The amount of recycled content in the modified PET resin is calculated by the following: 20,000 grams of P1 in 40,000 grams of the NPG-modified PET resin, which is 50 wt%.

*Preparation Example 11 (containing 45 mol% NPG modified PET resin) - P10:* 31480 grams (189.5 mol) of terephthalic acid, 7116 grams (114.6 mol) of ethylene glycol and 9769 grams (93.8 mol) of neopentyl glycol (NPG) was added into the reactor to form a mixture. In the mixture, assuming that the total amount of ethylene glycol and neopentyl glycol was 100 mol%, the amount of ethylene glycol was 55 mol%, and the amount of neopentyl glycol was 45 mol%. After heating the mixture in the reactor to 250°C and even mixing, the esterification reaction was performed under a nitrogen atmosphere while the generated water was distilled off. When the amount of water distilled reached the theoretical value of complete esterification, 340 ppm of antimony ethylene glycol and 100 ppm of trimethyl phosphate were added to the reactor to obtain a reactant. With the reactant, the polymerization was conducted in a vacuum environment at 275°C. After the intrinsic viscosity (IV) of the reactant reached 0.5~0.7 dL/g, the reactant was granulated through a granulator to obtain NPG-modified PET resin, with a batch size of 40,000 grams. The glass transition temperature of NPG-modified resin was 76°C. According to NMR analysis, the actual molar percentage of neopentyl glycol in the total glycol-modified mass was 45 mol%, and the intrinsic viscosity was 0.70 dL/g.

*Preparation Example 12 (containing 28 mol% NPG modified PET resin contained 50 wt% P1) - P11:* 15293 grams (92.1 mol) of terephthalic acid, 2744 grams (44.2 mol) of ethylene glycol and 6006 grams (57.7 mol) of neopentyl glycol (NPG) was added into the reactor to form a mixture. In the mixture, assuming that the total amount of ethylene glycol and neopentyl glycol was 100 mol%, the amount of ethylene glycol was 43 mol%, and the amount of neopentyl glycol was 57 mol%. After heating the mixture in the reactor to 250°C and even mixing, the esterification reaction was performed under a nitrogen atmosphere while the generated water was distilled off. When the amount of water distilled reached the theoretical value of complete esterification, 20,000 grams of P1 resin, 340 ppm of antimony ethylene glycol and 100 ppm of trimethyl

phosphate were added to the reactor to obtain a reactant. With the reactant, the polymerization was conducted in a vacuum environment at 275°C. After the intrinsic viscosity (IV) of the reactant reached 0.5~0.7 dL/g, the reactant was granulated through a granulator to obtain NPG-modified PET resin, with a batch size of 40,000 grams. The glass transition temperature of NPG-modified resin was 76°C. According to NMR analysis, the actual molar percentage of neopentyl glycol in the total glycol-modified mass was 28 mol%, and the intrinsic viscosity was 0.67 dL/g. The amount of recycled content in the modified PET resin is calculated by the following: 20,000 grams of P1 in 40,000 grams of the NPG-modified PET resin, which is 50 wt%.

*Preparation Example 13 (containing* 33 *mol% NPG modified PET resin contained 50 wt% P1) - P12:* 14960 grams (90.1 mol) of terephthalic acid, 2017 grams (32.5 mol) of ethylene glycol and 7006 grams (67.3 mol) of neopentyl glycol (NPG) was added into the reactor to form a mixture. In the mixture, assuming that the total amount of ethylene glycol and neopentyl glycol was 100 mol%, the amount of ethylene glycol was 33 mol%, and the amount of neopentyl glycol was 67 mol%. After heating the mixture in the reactor to 250°C and even mixing, the esterification reaction was performed under a nitrogen atmosphere while the generated water was distilled off. When the amount of water distilled reached the theoretical value of complete esterification, 20,000 grams of P1 resin, 340 ppm of antimony ethylene glycol and 100 ppm of trimethyl phosphate were added to the reactor to obtain a reactant. With the reactant, the polymerization was conducted in a vacuum environment at 275°C. After the intrinsic viscosity (IV) of the reactant reached 0.5~0.7 dL/g, the reactant was granulated through a granulator to obtain NPG-modified PET resin, with a batch size of 40,000 grams. The glass transition temperature of NPG-modified resin was 76°C. According to NMR analysis, the actual molar percentage of neopentyl glycol in the total glycol-modified mass was 33 mol%, and the intrinsic viscosity was 0.68 dL/g. The amount of recycled content in the modified PET resin is calculated by the following: 20,000 grams of P1 in 40,000 grams of the NPG-modified PET resin, which is 50 wt%.

*Preparation Example 14 (containing 25 mol% MPDO modified PET resin contained 50 wt% P1) - P13:* 16073 grams (96.8 mol) of terephthalic acid, 3357 grams (54.1 mol) of ethylene glycol and 4751 grams (52.7 mol) of 2-methyl-1,3-propanediol (MPDO) was added into the reactor to form a mixture. In the mixture, assuming that the total amount of ethylene glycol and 2-methyl-1,3-propanediol was 100 mol%, the amount of ethylene glycol was 51 mol%, and the amount of 2-methyl-1,3-propanediol was 49 mol%. After heating the mixture in the reactor to 250°C and even mixing, the esterification reaction was performed under a nitrogen atmosphere while the generated water was distilled off. When the amount of water distilled reached the theoretical value of complete esterification, 20,000 grams of P1 resin, 340 ppm of antimony ethylene glycol and 100 ppm of trimethyl phosphate were added to the reactor to obtain a reactant. With the reactant, the polymerization was conducted in a vacuum environment at 275°C. After the intrinsic viscosity (IV) of the reactant reached 0.5~0.7 dL/g, the reactant was granulated through a granulator to obtain MPDO-modified PET resin, with a batch size of 40,000 grams. The glass transition temperature of MPDO-modified resin was 69°C. According to NMR analysis, the actual molar percentage of 2-methyl-1,3-propanediol in the total glycol-modified mass was 25 mol%, and the intrinsic viscosity was 0.65 dL/g. The amount of recycled content in the modified PET resin is calculated by the following: 20,000 grams of P1 in 40,000 grams of the MPDO-modified PET resin, which is 50 wt%.

*Preparation Example 15 (containing 25 mol% NPG modified PET resin contained 50 wt% P1) - P14:* 18350 grams (94.5 mol) of dimethyl terephthalate, 7000 grams (112.8 mol) of ethylene glycol, 6370 grams (61.2 mol) of neopentyl glycol (NPG), and 500 ppm of manganese(II) acetate was added into the reactor to form a mixture. In the mixture, assuming that the total amount of ethylene glycol and neopentyl glycol was 100 mol%, the amount of ethylene glycol was 65 mol%, and the amount of neopentyl glycol was 35 mol%. After heating the mixture in the reactor to 200°C and even mixing, the esterification reaction was performed under a nitrogen atmosphere while the generated water was distilled off. When the amount of water distilled reached the theoretical value of complete esterification, 20,000 grams of P1 resin, 300 ppm of antimony glycol and 50 ppm of trimethyl phosphate were added to the reactor to obtain a reactant. With the reactant, the polymerization was conducted in a vacuum environment at 275°C. After the intrinsic viscosity (IV) of the reactant reached 0.5~0.7 dL/g, the reactant was granulated through a granulator to obtain NPG-modified PET resin, with a batch size of 40,000 grams. The glass transition temperature of NPG-modified resin was 76°C. According to NMR analysis, the actual molar percentage of neopentyl glycol in the total glycol-modified mass was 22 mol%, and the intrinsic viscosity was 0.68 dL/g. The amount of recycled content in the modified PET resin is calculated by the following: 20,000 grams of P1 in 40,000 grams of the NPG-modified PET resin, which is 50 wt%.

## Examples

*Example 1:* After the prepared P3 resin was added to the twin-screw extruder, the resin was melted, extruded at a temperature of 250°C, extruded through a T-die, and cast onto a chilled roller to obtain a sheet. The sheet was passed through a film stretching machine (production line speed 70 m/min) to obtain a heat-shrinkable polyester film with a thickness of 40 microns. The parameters were as follows: a preheating temperature of 98°C, a TD stretching temperature of 85°C, a TD stretching of 4.8 times, and an annealing temperature of 73°C. The amount of recycled material in the obtained polyester film was 10 wt%.

*Example 2:* After the prepared P3 resin was added to the twin-screw extruder, the resin was melted, extruded at a temperature of 250°C, extruded through a T-die, and cast onto a chilled roller to obtain a sheet. The sheet was passed through a film stretching machine (production line speed 70 m/min) to obtain a heat-shrinkable polyester film with a thickness of 40 microns. The parameters were as follows: a preheating temperature of 98°C, a TD stretching temperature of 87°C, a TD stretching of 4.8 times, and an annealing temperature of 87°C. The amount of recycled material in the obtained polyester film was 10 wt%.

*Example 3:* After the prepared P4 resin was added to the twin-screw extruder, the resin was melted, extruded at a temperature of 250°C, extruded through a T-die, and cast onto a chilled roller to obtain a sheet. The sheet was passed through a film stretching machine (production line speed 70 m/min) to obtain a heat-shrinkable polyester film with a thickness of 40 microns. The parameters were as follows: a preheating temperature of 98°C, a TD stretching temperature of 85°C, the TD stretching of 4.8 times, and an annealing temperature is 73°C. The amount of recycled material in the obtained polyester film was 30 wt%.

*Example 4:* After the prepared P4 resins was added to the twin-screw extruder, the resin melted, extruded at a temperature of 250°C, extruded through a T-die, and cast onto a chilled roller to obtain a sheet. The sheet was passed through a film stretching machine (production line speed 70 m/min) to obtain a heat-shrinkable polyester film with a thickness of 40 microns. The parameters were as follows: a preheating temperature of 98°C, a TD stretching temperature of 87°C, the TD stretching of 4.8 times, and an annealing temperature is 87°C, to obtain a heat-shrinkable film with a thickness of 40 microns. The amount of recycled material in the obtained polyester film was 30 wt%.

*Example 5:* After the prepared P5 resin was added to the twin-screw extruder, the resin was melted, extruded at a temperature of 250°C, extruded through a T-die, and cast onto a chilled roller to obtain a sheet. The sheet was passed through a film stretching machine (production line speed 70 m/min) to obtain a heat-shrinkable polyester film with a thickness of 40 microns. The parameters were as follows: a preheating temperature of 98°C, a TD stretching temperature of 85°C, the TD stretching of 4.8 times, and an annealing temperature of 73°C. The amount of recycled material in the obtained polyester film was 50 wt%.

*Example 6:* After the prepared P5 resins was added to the twin-screw extruder, the resin were melted, extruded at a temperature of 250°C, extruded through a T-die, and cast onto a chilled roller to obtain a sheet. The sheet was passed through a film stretching machine (production line speed 70 m/min) to obtain a heat-shrinkable polyester film with a thickness of 40 microns. The parameters were as follows: a preheating temperature of 98°C, a TD stretching temperature of 87°C, a TD stretching of 4.8 times, and an annealing temperature of 87°C. The amount of recycled material in the obtained polyester film was 50 wt%.

*Example 7:* After the prepared P6 resin was added to the twin-screw extruder, the resin was melted, extruded at a temperature of 250°C, extruded through a T-die, and cast onto a chilled roller to obtain a sheet. The sheet was passed through a film stretching machine (production line speed 70 m/min) to obtain a heat-shrinkable polyester film with a thickness of 40 microns. The parameters were as follows: a preheating temperature of 98°C, a TD stretching temperature of 85°C, a TD stretching of 4.8 times, and an annealing temperature of 73°C. The amount of recycled material in the obtained polyester film was 50 wt%.

*Example 8:* After the prepared P7 resin was added to the twin-screw extruder, the resin was melted, extruded at a temperature of 250°C, extruded through a T-die, and cast onto a chilled roller to obtain a sheet. The sheet was passed through a film stretching machine (production line speed 70 m/min) to obtain a heat-shrinkable polyester film with a thickness of 40 microns. The parameters were as follows: a preheating temperature of 98°C, a TD stretching temperature of 85°C, a TD stretching of 4.8 times, and an annealing temperature of 73°C. The amount of recycled material in the obtained polyester film was 50 wt%.

*Example 9:* After the prepared P8 resin was added to the twin-screw extruder, the resin was melted, extruded at a temperature of 250°C, extruded through a T-die, and cast onto a chilled roller to obtain a sheet. The sheet was passed through a film stretching machine (production line speed 70 m/min) to obtain a heat-shrinkable polyester film with a thickness of 40 microns. The parameters were as follows: a preheating temperature of 98°C, a TD stretching temperature of 85°C, a TD stretching of 4.8 times, and an annealing temperature of 73°C, to obtain a heat-shrinkable film with a thickness of 40 microns. The amount of recycled material in the obtained polyester film was 50 wt%.

*Example 10:* After the prepared P11 resin was added to the twin-screw extruder, the resin was melted, extruded at a temperature of 250°C, extruded through a T-die, and cast onto a chilled roller to obtain a sheet. The sheet was passed through a film stretching machine (production line speed 70 m/min) to obtain a heat-shrinkable polyester film with a thickness of 40 microns. The parameters were as follows: a preheating temperature of 98°C, a TD stretching temperature of 85°C, a TD stretching of 4.8 times, and an annealing temperature of 73°C, to obtain a heat-shrinkable film with a thickness of 40 microns. The amount of recycled material in the obtained polyester film was 50 wt%.

*Example 11:* After the prepared P12 resin was added to the twin-screw extruder, the resin was melted, extruded at a temperature of 250°C, extruded through a T-die, and cast onto a chilled roller to obtain a sheet. The sheet was passed through a film stretching machine (production line speed 70 m/min) to obtain a heat-shrinkable polyester film with a thickness of 40 microns. The parameters were as follows: a preheating temperature of 98°C, a TD stretching temperature

of 85°C, a TD stretching of 4.8 times, and an annealing temperature of 73°C, to obtain a heat-shrinkable film with a thickness of 40 microns. The amount of recycled material in the obtained polyester film was 50 wt%.

*Example 12:* After the prepared P13 resin was added to the twin-screw extruder, the resin was melted, extruded at a temperature of 250°C, extruded through a T-die, and cast onto a chilled roller to obtain a sheet. The sheet was passed through a film stretching machine (production line speed 70 m/min) to obtain a heat-shrinkable polyester film with a thickness of 40 microns. The parameters were as follows: a preheating temperature of 91°C, a TD stretching temperature of 78°C, a TD stretching of 4.8 times, and an annealing temperature of 66°C, to obtain a heat-shrinkable film with a thickness of 40 microns. The amount of recycled material in the obtained polyester film was 50 wt%.

*Example 13:* After the prepared P14 resin was added to the twin-screw extruder, the resin was melted, extruded at a temperature of 250°C, extruded through a T-die, and cast onto a chilled roller to obtain a sheet. The sheet was passed through a film stretching machine (production line speed 70 m/min) to obtain a heat-shrinkable polyester film with a thickness of 40 microns. The parameters were as follows: a preheating temperature of 98°C, a TD stretching temperature of 85°C, a TD stretching of 4.8 times, and an annealing temperature of 73°C, to obtain a heat-shrinkable film with a thickness of 40 microns. The amount of recycled material in the obtained polyester film was 50 wt%.

**Comparative Examples**

*Comparative Example 1:* After the P9 resin was added to the twin-screw extruder, the resin was melted, extruded at a temperature of 250°C, extruded through a T-die, and cast onto a chilled roller to obtain a sheet. The sheet was passed through a film stretching machine (production line speed 70 m/min) to obtain a heat-shrinkable polyester film with a thickness of 40 microns. The parameters were as follows: a preheating temperature of 98°C, a TD stretching temperature of 85°C, a TD stretching of 4.8 times, and an annealing temperature of 73°C. The amount of recycled material in the obtained polyester film was 50 wt%.

*Comparative Example 2:* After P5 resin was added to the twin-screw extruder, the resin was melted, extruded at a temperature of 300°C, extruded through a T-die, and cast onto a chilled roller to obtain a sheet. The sheet was passed through a film stretching machine (production line speed 70 m/min) to obtain a heat-shrinkable polyester film with a thickness of 40 microns. The parameters were as follows: a preheating temperature of 98°C, a TD stretching temperature of 85°C, a TD stretching of 4.8 times, and an annealing temperature of 73°C. The amount of recycled material in the obtained polyester film was 50 wt%.

*Comparative Example 3:* After adding a mixture containing 50 wt% P1 resin and 50 wt% P10 resin to a twin-screw extruder, the resins were melted, extruded at a temperature of 250°C, extruded through a T-die, and cast onto a chilled roller to obtain a sheet. The sheet was passed through a film stretching machine (production line speed 70 m/min) to obtain a heat-shrinkable polyester film with a thickness of 40 microns. The parameters were as follows: a preheating temperature of 98°C, a TD stretching temperature of 85°C, a TD stretching of 4.8 times, and an annealing temperature of 73°C. The amount of recycled material in the obtained polyester film was 50 wt%.

*Comparative Example 4:* After adding a mixture containing 50 wt% P1 resin and 50 wt% P10 resin to a twin-screw extruder, the resins were melted, extruded at a temperature of 300°C, extruded through a T-die, and cast onto a chilled roller to obtain a sheet. The sheet was passed through a film stretching machine (production line speed 70 m/min) to obtain a heat-shrinkable polyester film with a thickness of 40 microns. The parameters were as follows: a preheating temperature of 98°C, a TD stretching temperature of 85°C, a TD stretching of 4.8 times, and an annealing temperature of 73°C. The amount of recycled material in the obtained polyester film was 50 wt%.

*Comparative Example 5:* After adding a mixture containing 50 wt% P1 resin and 50 wt% P10 resin to a twin-screw extruder, the resins were melted, extruded at a temperature of 300°C, extruded through a T-die, and cast onto a chilled roller to obtain a sheet. The sheet was passed through a film stretching machine (production line speed 70 m/min) to obtain a heat-shrinkable polyester film with a thickness of 40 microns. The parameters were as follows: a preheating temperature of 98°C, a TD stretching temperature of 87°C, a TD stretching of 4.8 times, and an annealing temperature of 87°C. The amount of recycled material in the obtained polyester film was 50 wt%.

*Comparative Example 6:* After adding a mixture containing 50 wt% P2 resin and 50 wt% P10 resin to a twin-screw extruder, the resins were melted, extruded at a temperature of 250°C, extruded through a T-die, and cast onto a chilled roller to obtain a sheet. The sheet was passed through a film stretching machine (production line speed 70 m/min) to obtain a heat-shrinkable polyester film with a thickness of 40 microns. The parameters were as follows: a preheating temperature of 98°C, a TD stretching temperature of 85°C, a TD stretching of 4.8 times, and an annealing temperature of 73°C. The amount of recycled material in the obtained polyester film was 50 wt%.

The below tables summarize the following properties determined for the films of Examples 1-13 and Comparative Examples 1-6. The properties were determined in accordance with the protocols and methods described in herein.

| No. | Recycled Material Content (%) | NPG Content (mol%) | Benzene Content (ppb) | C3 Oligomer Content (ppm) | C4 Oligomer Content (ppm) | C5 Oligomer Content (ppm) | Total Oligomer Content (ppm) |
|---|---|---|---|---|---|---|---|
| Ex. 1 | 10% | 22% | <5 | 5280 | 489 | 292 | 6061 |
| Ex. 2 | 10% | 22% | <5 | 5165 | 399 | 310 | 5874 |
| Ex. 3 | 30% | 22% | 18 | 5417 | 626 | 620 | 6663 |
| Ex. 4 | 30% | 22% | 28 | 4672 | 300 | 320 | 5292 |
| Ex. 5 | 50% | 22% | 65 | 4682 | 243 | 260 | 5185 |
| Ex. 6 | 50% | 22% | 62 | 5147 | 721 | 366 | 6234 |
| Ex. 7 | 50% | 16% | 49 | 5203 | 781 | 408 | 6392 |
| Ex. 8 | 50% | 22% | 72 | 5217 | 938 | 435 | 6590 |
| Ex. 9 | 50% | 22% | <5 | 5105 | 380 | 350 | 5835 |
| Ex. 10 | 50% | 28% | 25 | 5231 | 396 | 442 | 6069 |
| Ex. 11 | 50% | 33% | 33 | 5648 | 514 | 534 | 6696 |
| Ex. 12* | 50% | 25%* | 21 | 5872 | 648 | 413 | 6933 |
| Ex. 13** | 50% | 22% | 69 | 5230 | 459 | 250 | 5939 |
| Comp. Ex. 1 | 50% | 11% | 55 | 5350 | 751 | 315 | 6416 |
| Comp. Ex. 2 | 50% | 22% | 75 | 7100 | 780 | 623 | 8503 |
| Comp. Ex. 3 | 50% | 22% | 722 | 5693 | 2566 | 1013 | 9272 |
| Comp. Ex. 4 | 50% | 22% | 926 | 6895 | 3185 | 1059 | 11139 |
| Comp. Ex. 5 | 50% | 22% | 978 | 6779 | 3199 | 1037 | 11015 |
| Comp. Ex. 6 | 50% | 22% | 1783 | 6619 | 2361 | 1252 | 10232 |

*MPDO was used instead of NPG
**DMT was used instead of TPA

| No. | Acid Value (eq/t) | Total Weight Loss[1] (wt%) | $T_m$-$T_{ch}$ (°C) | $T_{ch}$-$T_g$ (°C) |
|---|---|---|---|---|
| Ex. 1 | 21 | 0.13 | 70 | 46 |
| Ex. 2 | 21 | 0.15 | 79 | 36 |
| Ex. 3 | 23 | 0.24 | 69 | 48 |
| Ex. 4 | 23 | 0.23 | 85 | 33 |
| Ex. 5 | 28 | 0.25 | 70 | 45 |
| Ex. 6 | 27 | 0.22 | 80 | 34 |
| Ex. 7 | 25 | 0.24 | 93 | 34 |
| Ex. 8 | 30 | 0.44 | 69 | 47 |
| Ex. 9 | 20 | 0.13 | 69 | 46 |
| Ex. 10 | 22 | 0.26 | 52 | 55 |
| Ex. 11 | 27 | 0.15 | 38 | 62 |
| Ex. 12 | 24 | 0.22 | 86 | 37 |
| Ex. 13 | 13 | 0.13 | 76 | 40 |
| Comp. Ex. 1 | 27 | 0.25 | 112 | 23 |
| Comp. Ex. 2 | 41 | 1.1 | 73 | 43 |

(continued)

| No. | Acid Value (eq/t) | Total Weight Loss[1] (wt%) | $T_m$-$T_{ch}$ (°C) | $T_{ch}$-$T_g$ (°C) |
|---|---|---|---|---|
| Comp. Ex. 3 | 43 | 1.5 | 147 | 21 |
| Comp. Ex. 4 | 47 | 3.4 | 124 | 28 |
| Comp. Ex. 5 | 46 | 3.4 | 136 | 21 |
| Comp. Ex. 6 | 52 | 2.1 | 145 | 19 |

[1] = total weight loss as determined by TGA at 250°C and 10 minutes

| No. | TD Shrink -age (%)[1] | MD Shrinkage (%)[2] | TD Shrink Force (MPa) | TD Shrink Force / TD Shrinkage (MPa)[3] | Gloss (GU) | Haze (%) | Production Roller Wiping Frequency | Shrinking performance |
|---|---|---|---|---|---|---|---|---|
| Ex. 1 | 76.8 | 0.9 | 12.1 | 15.755 | 153 | 2.9 | O | O |
| Ex. 2 | 67.5 | 0.8 | 9.9 | 14.667 | 148 | 2.5 | O | O |
| Ex. 3 | 78.1 | 1.8 | 12.8 | 16.389 | 149 | 3.1 | O | O |
| Ex. 4 | 68.8 | 1.6 | 9.3 | 13.517 | 145 | 3.2 | O | O |
| Ex. 5 | 77.2 | 1.2 | 11.0 | 14.249 | 146 | 3.6 | O | O |
| Ex. 6 | 68.7 | 0.8 | 9.4 | 13.683 | 142 | 3.7 | O | O |
| Ex. 7 | 71.5 | 2.5 | 11.9 | 16.643 | 148 | 3.5 | O | O |
| Ex. 8 | 77.5 | 1.9 | 11.8 | 15.226 | 142 | 3.8 | O | O |
| Ex. 9 | 77.4 | 0.8 | 11.9 | 15.375 | 150 | 2.9 | O | O |
| Ex. 10 | 77.7 | 0.5 | 12.1 | 15.573 | 151 | 2.6 | O | O |
| Ex. 11 | 78 | 0.2 | 12.5 | 16.026 | 152 | 2.4 | O | O |
| Ex. 12 | 76.7 | 0.8 | 10.9 | 14.211 | 148 | 3.2 | O | O |
| Ex. 13 | 76.9 | 0.7 | 11.5 | 14.954 | 149 | 3.5 | O | O |
| Comp. Ex. 1 | 61.5 | 5.9 | 12.8 | 20.813 | 145 | 3.4 | O | X |
| Comp. Ex. 2 | 76.2 | 0.5 | 12.3 | 16.142 | 141 | 4.3 | X | O |
| Comp. Ex. 3 | 73.1 | 5.8 | 15.9 | 21.751 | 136 | 5.1 | XX | X |
| Comp. Ex. 4 | 74.4 | 5.1 | 15.1 | 20.296 | 133 | 4.9 | XX | X |
| Comp. Ex. 5 | 65.1 | 4.6 | 13.1 | 20.123 | 137 | 4.2 | XX | X |
| Comp. Ex. 6 | 74.2 | 5.6 | 16.1 | 21.698 | 127 | 5.4 | XX | X |

[1] TD shrinkage at 95°C and 10 seconds
[2] MD shrinkage at 95°C and 10 seconds
[3] = value obtained by dividing the shrink force in TD by the TD shrinkage after immersing the heat-shrinkable polyester film at about 95°C for about 10 seconds

While certain embodiments have been illustrated and described, it should be understood that changes and modifications can be made therein in accordance with ordinary skill in the art without departing from the technology in its broader aspects as defined in the following claims.

The embodiments, illustratively described herein may suitably be practiced in the absence of any element or elements, limitation or limitations, not specifically disclosed herein. Thus, for example, the terms "comprising," "including," "containing," etc. shall be read expansively and without limitation. Additionally, the terms and expressions employed herein have been used as terms of description and not of limitation, and there is no intention in the use of such terms and expressions of excluding any equivalents of the features shown and described or portions thereof, but it is recognized that various modifications are possible within the scope of the claimed technology. Additionally, the phrase "consisting

essentially of" will be understood to include those elements specifically recited and those additional elements that do not materially affect the basic and novel characteristics of the claimed technology. The phrase "consisting of" excludes any element not specified.

The present disclosure is not to be limited in terms of the particular embodiments described in this application. Many modifications and variations can be made without departing from its spirit and scope, as will be apparent to those skilled in the art. Functionally equivalent methods and compositions within the scope of the disclosure, in addition to those enumerated herein, will be apparent to those skilled in the art from the foregoing descriptions. Such modifications and variations are intended to fall within the scope of the appended claims. The present disclosure is to be limited only by the terms of the appended claims, along with the full scope of equivalents to which such claims are entitled. It is to be understood that this disclosure is not limited to particular methods, reagents, compounds, or compositions, which can of course vary. It is also to be understood that the terminology used herein is for the purpose of describing particular embodiments only, and is not intended to be limiting.

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, particularly in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein can be readily broken down into a lower third, middle third and upper third, etc. As will also be understood by one skilled in the art all language such as "up to," "at least," "greater than," "less than," and the like, include the number recited and refer to ranges which can be subsequently broken down into subranges as discussed above. Finally, as will be understood by one skilled in the art, a range includes each individual member.

All publications, patent applications, issued patents, and other documents referred to in this specification are herein incorporated by reference as if each individual publication, patent application, issued patent, or other document was specifically and individually indicated to be incorporated by reference in its entirety. Definitions that are contained in text incorporated by reference are excluded to the extent that they contradict definitions in this disclosure.

Other embodiments are set forth in the following claims.

## Claims

1. A method for manufacturing a heat-shrinkable polyester film comprising:

    (a) heating a mixture comprising terephthalic acid (TPA) or dimethyl terephthalate (DMT), ethylene glycol (EG), a modifier component, and optionally, recycled material to undergo esterification to provide an esterified product;
    (b) heating the esterified product in the presence of a catalyst, heat stabilizer, and optionally, recycled material to undergo polymerization and to provide a polyester product;
    (c) granulating the polyester product to provide a polyester resin composition;
    (d) extruding the polyester resin composition to provide a sheet, wherein the extruding occurs at a temperature of from about 180°C to about 280°C; and
    (e) subjecting the sheet to a film formation process to provide the heat-shrinkable polyester film,

    wherein the recycled material is added at step (a), step (b), or both steps (a) and (b).

2. The method of claim 1, wherein in step d) the extruding occurs at a temperature of about 250°C.

3. The method of claim 1 or 2, wherein in step a) the mixture is heated at a temperature of about 175°C to about 275°C.

4. The method of any one of claims 1-3, wherein in step b) the esterified product is heated at a temperature of about 250°C to about 300°C under vacuum.

5. The method of any one of claims 1-4, wherein in step b) the polyester product reaches an intrinsic viscosity (IV) of about 0.5 dL/g to about 0.7 dL/g.

6. The method of any one of claims 1-5, wherein the recycled material comprises recycled polyester flakes, recycled polyester resins, recycled PET (rPET) resins, recycled polyethylene terephthalate (PET) flakes, recycled terephthalic acid (rTPA), recycled ethylene glycol (rEG), recycled neopentyl glycol (rNPG), recycled bis-hydroxyethyl terephthalate (rBHET), and any combination thereof.

7. The method of any one of claims 1-6, wherein the heat-shrinkable polyester film comprises about 10 wt% to about 90 wt% recycled material, based on a total weight of the heat-shrinkable polyester film.

8. The method of any one of claims 1-7, wherein the modifier component comprises one or more of neopentyl glycol, 2-methyl-1,3-propanediol, 1,4-cyclohexanedimethanol, diethylene glycol, and butanediol, optionally one or more of neopentyl glycol and 2-methyl-1,3-propanediol.

9. The method of claim 8, wherein the heat-shrinkable polyester film has a neopentyl glycol molar percentage of about 13 mol% to about 35 mol%, based on the total diol molar percentage is about 100 mol% and/or wherein the heat-shrinkable polyester film has a 2-methyl-1,3-propanediol molar percentage of about 13 mol% to about 35 mol%, based on the total diol molar percentage is about 100 mol%.

10. The method of any one of claims 1-9, wherein the heat-shrinkable polyester film has a benzene content of less than about 500 ppb.

11. A heat-shrinkable polyester film prepared by the method of any one of claims 1-10.

12. A heat-shrinkable polyester film comprising a polyester resin composition comprising terephthalic acid or dimethyl terephthalate, ethylene glycol, a modifier component, and recycled material,
wherein the heat-shrinkable polyester film has a benzene content of less than about 500 ppb, a C3 oligomer content of less than about 6500 ppm, a C4 oligomer content of less than 1000 ppm, and a C5 oligomer content of less than 700 ppm.

13. The heat-shrinkable polyester film of claim 12, wherein the heat-shrinkable polyester film has a benzene content of about 0 ppb to about 300 ppb, optionally about 5 ppb to about 100 ppb.

14. The heat-shrinkable polyester film of claims 12 or 13, wherein the heat-shrinkable polyester film has a C4 oligomer content of about 100 ppm to about 950 ppm and/or wherein the polyester film has a C5 oligomer content of about 100 ppm to about 650 ppm.

15. The heat-shrinkable polyester film of any one of claims 12 to 14, wherein the heat-shrinkable polyester film has an acid value of less than 40 eq/t.

16. The heat-shrinkable polyester film of any one of claims 12 to 15, wherein the heat-shrinkable polyester film has a haze of less than 4%.

17. The heat-shrinkable polyester film of any one of claims 12 to 16, wherein the heat-shrinkable polyester film has a gloss of greater than about 140GU.

18. The heat-shrinkable polyester film of any one of claims 12 to 17, wherein the heat-shrinkable polyester film has one or more of the following:

(i) a shrinkage in the transverse direction of greater than about 55% after immersing the heat-shrinkable polyester film at about 95°C for about 10 seconds,
(ii) a shrinkage in the machine direction of less than about 5% after immersing the heat-shrinkable polyester film at about 95°C for about 10 seconds, and
(iii) a value obtained from dividing the shrink force in the transverse direction (TD) by the TD shrinkage after immersing the heat-shrinkable polyester film at about 95°C for about 10 seconds that is less than about or equal to 20 MPa.

19. The heat-shrinkable polyester film of any one of claims 12 to 18, wherein the recycled material comprises recycled polyester flakes, recycled polyester resins, recycled PET (rPET) resins, recycled polyethylene terephthalate (PET) flakes, recycled terephthalic acid (rTPA), recycled ethylene glycol (rEG), recycled neopentyl glycol (rNPG), recycled bis-hydroxyethyl terephthalate (rBHET), and any combination thereof.

20. The heat-shrinkable polyester film of any one of claims 12 to 19, wherein the heat-shrinkable polyester film comprises

about 10 wt% to about 90 wt% recycled material, based on a total weight of the heat-shrinkable polyester film.

**21.** The heat-shrinkable polyester film of any one of claims 12 to 20, wherein the heat-shrinkable polyester film has a total weight loss of less than 1% as determined by TGA at 250°C and 10 minutes.

**22.** The heat-shrinkable polyester film of any one of claims 12 to 21, wherein the modifier component comprises one or more of neopentyl glycol, 2-methyl-1,3-propanediol, 1,4-cyclohexanedimethanol, diethylene glycol, and butanediol, optionally one or more of neopentyl glycol and 2-methyl-1,3-propanediol.

**23.** The heat-shrinkable polyester film of claim 22, wherein the heat-shrinkable polyester film has a neopentyl glycol molar percentage of about 13 mol% to about 35 mol%, based on the total diol molar percentage is about 100 mol% and/or wherein the heat-shrinkable polyester film has a 2-methyl-1,3-propanediol molar percentage of about 13 mol% to about 35 mol%, based on the total diol molar percentage is about 100 mol%.

FIG. 1

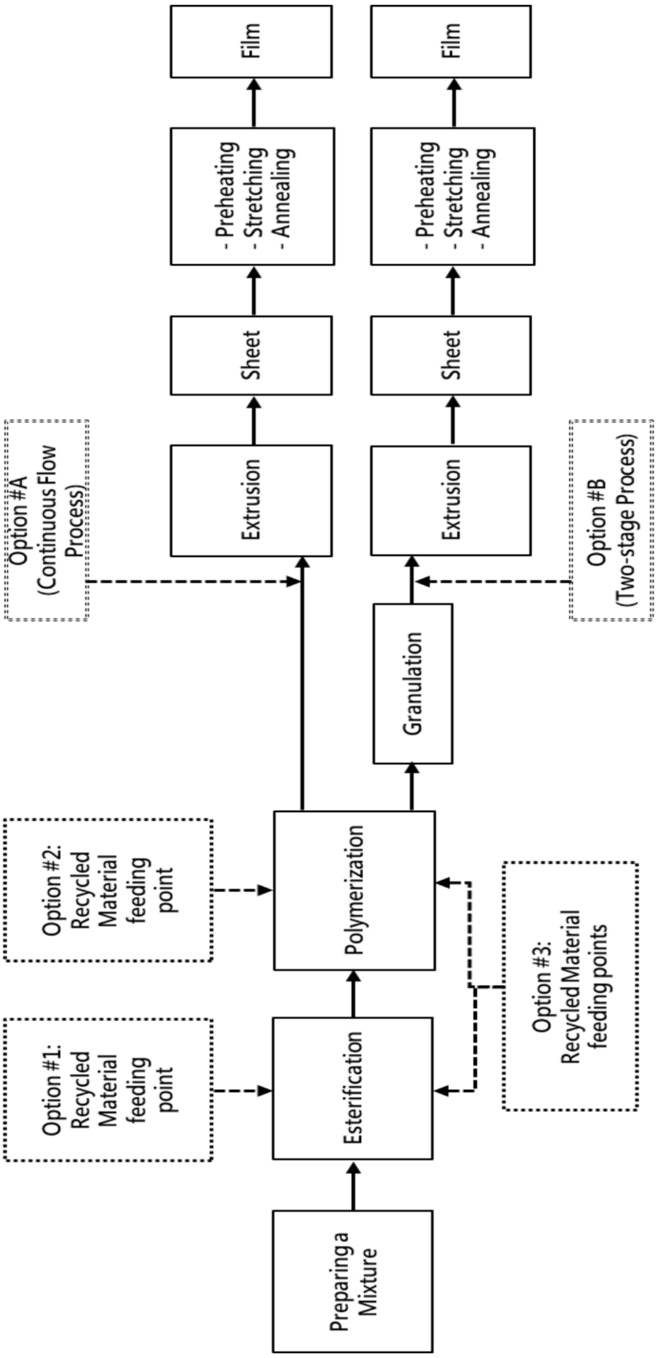
Preparing a Mixture
Esterification
Polymerization
Option #1: Recycled Material feeding point
Option #2: Recycled Material feeding point
Option #3: Recycled Material feeding points
Option #A (Continuous Flow Process)
Option #B (Two-stage Process)
Granulation
Extrusion
Sheet
- Preheating
- Stretching
- Annealing
Film
Extrusion
Sheet
- Preheating
- Stretching
- Annealing
Film

Europäisches Patentamt
European Patent Office
Office européen des brevets

# EUROPEAN SEARCH REPORT

Application Number
EP 25 22 0383

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/253810 A1 (CHANG LI-LING [TW] ET AL) 19 August 2021 (2021-08-19) * paragraphs [0057], [0058], [0060] - [0068]; claims 1-27; examples 1-6; table 3 * | 1,3-23 | INV. C08J5/18 C08J3/00 B29C48/00 B29C61/00 C08G63/183 C08G63/46 |
| X | EP 4 357 389 A1 (SK CHEMICALS CO LTD [KR]) 24 April 2024 (2024-04-24) * paragraphs [0116], [0132] - [0142], [0151], [0179] - [0186]; claims 1-14; examples 1, 4, 7; tables 1-5 * | 1-4,6-8, 10-22 | |
| X | EP 4 122 970 A1 (FAR EASTERN NEW CENTURY CORP [TW]) 25 January 2023 (2023-01-25) * paragraphs [0060], [0061], [0066] - [0068]; claims 1-24; example 9; tables 4, 8 * | 1,3-23 | |
| X | US 2022/372217 A1 (HOWELL JR EARL EDMONDSON [US] ET AL) 24 November 2022 (2022-11-24) * paragraphs [0386] - [0403]; claims 1-20 * | 1,3-23 | TECHNICAL FIELDS SEARCHED (IPC) |
| | | | C08J C08G B29C |
| A | WO 2023/059368 A1 (EASTMAN CHEM CO [US]) 13 April 2023 (2023-04-13) * paragraph [0029]; claims 1-20; examples 1-17 * | 1-23 | |

The present search report has been drawn up for all claims

1

| Place of search | Date of completion of the search | Examiner |
|---|---|---|
| Munich | 15 April 2026 | Fischer, Viktor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 25 22 0383

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2026

| Patent document cited in search report | Publication date | Patent family member(s) | Publication date |
|---|---|---|---|
| US 2021253810 A1 | 19-08-2021 | CN 113265122 A | 17-08-2021 |
| | | TW 202132401 A | 01-09-2021 |
| | | US 2021253810 A1 | 19-08-2021 |
| EP 4357389 A1 | 24-04-2024 | CN 117940480 A | 26-04-2024 |
| | | EP 4357389 A1 | 24-04-2024 |
| | | JP 7770548 B2 | 14-11-2025 |
| | | JP 2024539543 A | 29-10-2024 |
| | | KR 20230149644 A | 27-10-2023 |
| | | TW 202405072 A | 01-02-2024 |
| | | US 2024158568 A1 | 16-05-2024 |
| | | WO 2023204561 A1 | 26-10-2023 |
| EP 4122970 A1 | 25-01-2023 | CN 115678213 A | 03-02-2023 |
| | | EP 4122970 A1 | 25-01-2023 |
| | | TW 202305030 A | 01-02-2023 |
| | | US 2023039563 A1 | 09-02-2023 |
| US 2022372217 A1 | 24-11-2022 | CN 114787233 A | 22-07-2022 |
| | | EP 4041797 A1 | 17-08-2022 |
| | | JP 7830316 B2 | 16-03-2026 |
| | | JP 2022552207 A | 15-12-2022 |
| | | KR 20220079916 A | 14-06-2022 |
| | | US 2022372217 A1 | 24-11-2022 |
| | | WO 2021072020 A1 | 15-04-2021 |
| WO 2023059368 A1 | 13-04-2023 | CN 118076665 A | 24-05-2024 |
| | | EP 4413060 A1 | 14-08-2024 |
| | | JP 2024537184 A | 10-10-2024 |
| | | KR 20240067984 A | 17-05-2024 |
| | | TW 202315906 A | 16-04-2023 |
| | | US 2025011533 A1 | 09-01-2025 |
| | | WO 2023059368 A1 | 13-04-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 63729252